# EUROPEAN PATENT APPLICATION

(11) **EP 4 447 534 A1**
(43) Date of publication of application: **16.10.2024**
(21) Application number: 23742829.7
(22) Date of filing: 13.01.2023
(51) Int. Cl.: H04W 24/08, H04W 4/02

(54) **INFORMATION PROCESSING METHOD AND COMMUNICATION APPARATUS**

(30) Priority: 24.01.2022 CN 202210082047
(71) Applicant: Huawei Technologies Co., Ltd., Shenzhen, Guangdong 518129 (CN)
(72) Inventor: WANG, Jun, Shenzhen, Guangdong 518129 (CN); PENG, Chenghui, Shenzhen, Guangdong 518129 (CN)
(74) Representative: Goddar, Heinz J.
(86) International application number: PCT/CN2023/072189
(87) International publication number: WO 2023/138514

(57) **Abstract**

Embodiments of this application provide an information processing method and a communication apparatus. The method includes: A first communication apparatus receives first task information that is about a task to be executed and that is from a second communication apparatus. The first task information includes a task identifier of the task and geographical range information of the task, and the task includes at least one of the following: an artificial intelligence AI task or a sensing task. The first communication apparatus causes, based on the first task information, the task to be executed. In this way, the first communication apparatus can cause, based on the first task information from the second communication apparatus, the task to be executed. Therefore, the second communication apparatus manages and controls the task, ensuring that the first communication apparatus located in a geographical range indicated by the geographical range information can correctly execute the task.

## Description

This application claims priority to Chinese Patent Application No. 202210082047.1, filed with the China National Intellectual Property Administration on January 24, 2022 and entitled "INFORMATION PROCESSING METHOD AND COMMUNICATION APPARATUS", which is incorporated herein by reference in its entirety.

### TECHNICAL FIELD

This application relates to the communication field, and more specifically, to an information processing method and a communication apparatus.

### BACKGROUND

With evolution of technologies, the 3rd generation partnership project (3rd Generation Partnership Project, 3GPP) plans to support various artificial intelligence (Artificial Intelligence, AI) algorithms in a wireless communication system. However, there is no AI-based wireless communication protocol solution currently.

### SUMMARY

Embodiments of this application provide an information processing solution, so that an AI processing task can be configured on a communication apparatus, thereby ensuring that the AI processing task is correctly processed.

According to a first aspect of this application, an information processing method is provided. The method includes: A first communication apparatus receives first task information that is about a task to be executed and that is from a second communication apparatus. The first task information includes a task identifier of the task and geographical range information of the task, and the task includes at least one of the following: an artificial intelligence AI task or a sensing task. The first communication apparatus causes, based on the first task information, the task to be executed.

In this way, the first communication apparatus can cause, based on the first task information from the second communication apparatus, the task to be executed. Therefore, the second communication apparatus manages and controls the task, ensuring that the first communication apparatus located in a geographical range indicated by the geographical range information can correctly execute the task.

In some implementations of the first aspect, the method further includes: The first communication apparatus sends first feedback information to the second communication apparatus. The first feedback information includes the task identifier.

In some implementations of the first aspect, the first feedback information includes at least one of the following: indication information indicating whether the first task information is successfully accepted by the first communication apparatus; indication information indicating whether execution of the task has been completed; execution result information of the task; execution progress information of the task; exception information indicating that execution of the task is abnormal; or recommendation information of the first communication apparatus for the task.

In this way, the first communication apparatus can feed back various information during the execution of the task to the second communication apparatus by using the first feedback information, so that the second communication apparatus can learn of a task execution state timely.

In some implementations of the first aspect, the first feedback information includes execution progress information of the task, and the method further includes: The first communication apparatus receives state query information from the second communication apparatus. The state query information includes the task identifier.

In some implementations of the first aspect, the execution progress information indicates at least one of the following: completion progress information, processor capacity information, memory capacity information, electric power information, or an intermediate computing result. Optionally, the execution progress information may indicate a value of an execution parameter, and the execution parameter includes one or more of the following: a completion progress, a processor capacity, a memory capacity, electric power, or the intermediate computing result.

In some implementations of the first aspect, the first task information further includes a node identifier, and that the first communication apparatus sends first feedback information to the second communication apparatus includes: The first communication apparatus sends, based on the node identifier, the first feedback information to a node corresponding to the node identifier. Optionally, the node identifier may indicate a central unit (Central Unit, CU), a distributed unit (Distributed Unit, DU), a CU control plane (control plane, CP) CU-CP, a CU user plane (user plane, UP) CU-UP, a core network device, or the like.

In this way, the second communication apparatus can specify, by using the node identifier, a path for performing information transmission by the first communication apparatus, so that the first communication apparatus can perform information transmission based on the path specified using the node identifier.

In some implementations of the first aspect, the first task information further includes an encapsulation protocol layer identifier, and that the first communication apparatus sends first feedback information to the second communication apparatus includes: The first communication apparatus encapsulates the first feedback information based on the encapsulation protocol layer identifier. The first communication apparatus sends encapsulated first feedback information to the second communication apparatus. Optionally, the encapsulation protocol layer identifier may indicate a physical layer, a media access control (Medium Access Control, MAC) layer, a radio link control (Radio link control, RLC) layer, a packet data convergence protocol (Packet Data Convergence Protocol, PDCP) layer, a radio resource control (Radio Resource Control, RRC) layer, a service data adaptation protocol (Service Data Adaptation Protocol, SDAP) layer, or the like.

In this way, the second communication apparatus can specify, by using the encapsulation protocol layer identifier, a path for performing information transmission by the first communication apparatus, so that the first communication apparatus can perform encapsulation based on the encapsulation protocol layer identifier, and determine the transmission path based on the encapsulation protocol layer identifier.

In some implementations of the first aspect, the method further includes: If it is determined that the first communication apparatus is outside an execution range indicated by the geographical range information, the first communication apparatus stops processing of the task or deletes the task.

In this way, the first communication apparatus can ensure, based on the execution range indicated by the geographical range information, that the task is executed within the execution range, thereby avoiding a resource waste caused by invalid execution outside the execution range.

In some implementations of the first aspect, the method further includes: The first communication apparatus sends a notification message to the second communication apparatus. The notification message indicates at least one of the following: The first communication apparatus is already outside the execution range, the first communication apparatus has stopped the processing of the task, or the first communication apparatus has deleted the task.

In this way, the first communication apparatus can timely notify the second communication apparatus of the notification message indicating that the task is no longer executed, so that the second communication apparatus can perform subsequent configuration of the task based on the notification message.

In some implementations of the first aspect, the first task information further includes a device identification of a third communication apparatus, and that the first communication apparatus causes, based on the first task information, the task to be executed includes: The first communication apparatus sends the first task information to the third communication apparatus, to cause the task to be executed by the third communication apparatus.

In this way, the first communication apparatus can cause, based on an indication of the device identification in the first task information, the third communication apparatus to execute the task. For example, the first communication apparatus and the third communication apparatus may collaboratively complete the task, and the first communication apparatus may manage and control a life cycle of the task for the third communication apparatus.

In some implementations of the first aspect, the method further includes: The first communication apparatus receives second feedback information from the third communication apparatus. The first communication apparatus sends the second feedback information to the second communication apparatus.

In some implementations of the first aspect, the second feedback information includes at least one of the following: indication information indicating whether the first task information is successfully accepted by the third communication apparatus; indication information indicating whether execution of the task has been completed; execution result information of the task; execution progress information of the task; exception information indicating that execution of the task is abnormal; or recommendation information of the third communication apparatus for the task.

In this way, the first communication apparatus can receive indication information of various states of task execution from the third communication apparatus, so that the first communication apparatus manages and controls a life cycle of the task for the third communication apparatus.

In some implementations of the first aspect, the first task information further includes at least one of the following: a function identifier of a communication function for which an output of the task is to be used; a model parameter of an AI model used for the task; an execution requirement of the task; time range information for executing the task; or granularity information for executing the task.

In this way, the first task information can include the function identifier of the communication function for which the output is to be used, so that after the first communication apparatus completes the execution of the task, the output can be used for the communication function corresponding to the function identifier. Therefore, processing efficiency and processing precision that are of the subsequent communication function can be further improved.

In some implementations of the first aspect, the execution requirement includes at least one of the following: a latency parameter requirement or a reliability requirement.

In this way, the first task information can include the execution requirement, so that the first communication apparatus can determine, based on the execution requirement, whether the execution of the task meets a requirement indicated by the execution requirement. Therefore, this facilitates determining of task precision, and can further determine availability of the output of the task for the subsequent communication function.

In some implementations of the first aspect, the time range information includes at least one of the following: a quantity of execution times, execution duration, or trigger condition information.

In this way, the first task information can include the time range information, to indicate a start condition or an end condition for the first communication apparatus to execute the task, thereby avoiding a resource waste caused because the first communication apparatus starts to execute the task excessively early or executes the task infinitely.

In some implementations of the first aspect, the model parameter includes at least one of the following: a model identifier of the AI model corresponding to the task identifier, a first identifier of an input parameter of the AI model, or a second identifier of an output parameter of the Al model. Optionally, the first communication apparatus receives configuration information from the second communication apparatus. The configuration information includes the task identifier, the model identifier of the corresponding Al model, the first identifier of the input parameter of the AI model, or the second identifier of the output parameter of the AI model.

In this way, the Al model, the input parameter of the AI model, or the output parameter of the AI model may be preset, so that only the model identifier, the first identifier, or the second identifier needs to be used for indication in the configuration information, thereby reducing signaling overheads. In addition, the preset Al model, parameters, and the like may be applied to various tasks as required, thereby implementing decoupling between the task and the Al model.

In some implementations of the first aspect, the model parameter includes at least one of the following: a model identifier of the AI model, an input parameter of the AI model, and an output parameter of the AI model.

In some implementations of the first aspect, the first communication apparatus is any one of the following: a core network device, an access network device, or a terminal device. The second communication apparatus is any one of the following: a core network device, an access network device, or a terminal device. The third communication apparatus is any one of the following: a core network device, an access network device, or a terminal device.

In this way, this embodiment of this application is applicable to various types of communication devices, and is applicable to task configuration and task execution processes of communication devices of a same type or different types.

In some implementations of the first aspect, the method further includes: The first communication apparatus receives task modification information from the second communication apparatus. The task modification information includes a first task identifier, and the task modification information further indicates an identifier of a to-be-modified parameter. The parameter may include a parameter (for example, an AI parameter) used in an execution process of a first task, or may include an execution state parameter of the first task or the like. Execution states of the task may include: not started, started, paused, stopped, and the like.

In some implementations of the first aspect, the method further includes: The first communication apparatus receives task deletion information from the second communication apparatus. The task deletion information includes the first task identifier, and the task deletion information further includes an indication about whether to retain the task configuration information.

In some implementations of the first aspect, the method further includes: The first communication apparatus deletes the task based on the task deletion information.

In some implementations of the first aspect, the method further includes: The first communication apparatus deletes the first task information based on the task deletion information.

In this manner, in this embodiment of this application, the first communication apparatus can determine, based on various indication information from the second communication apparatus, that the execution of the task is correct, to avoid a case in which a result is unreliable because information of two parties is asymmetrical.

According to a second aspect of this application, an information processing method is provided. The method includes: A second communication apparatus determines first task information about a first task to be executed. The first task information includes a first task identifier of the first task and geographical range information of the first task, and the first task includes at least one of the following: an artificial intelligence AI task or a sensing task. The second communication apparatus sends the first task information to a first communication apparatus.

In some implementations of the second aspect, the method further includes: The second communication apparatus receives first feedback information from the first communication apparatus. The first feedback information includes the first task identifier.

In some implementations of the second aspect, the first feedback information includes at least one of the following: indication information indicating whether the first task information is successfully accepted by the first communication apparatus; indication information indicating whether execution of the first task has been completed; execution result information of the first task; execution progress information of the first task; exception information indicating that execution of the first task is abnormal; or recommendation information of the first communication apparatus for the first task.

In some implementations of the second aspect, the first feedback information includes the execution progress information of the first task, and the method further includes: The second communication apparatus sends state query information to the first communication apparatus. The state query information includes the first task identifier.

In some implementations of the second aspect, the execution progress information indicates at least one of the following: completion progress information, processor capacity information, memory capacity information, electric power information, or an intermediate computing result.

In some implementations of the second aspect, the first task information further includes at least one of the following: a node identifier or an encapsulation protocol layer identifier.

In some implementations of the second aspect, the method further includes: The second communication apparatus receives a notification message from the first communication apparatus. The notification message indicates at least one of the following: The first communication apparatus is already outside an execution range indicated by the geographical range information, the first communication apparatus has stopped processing of the first task, or the first communication apparatus has deleted the first task.

In some implementations of the second aspect, the first task information further includes an identification of a third communication apparatus, to indicate the first communication apparatus to send the first task information to the third communication apparatus.

In some implementations of the second aspect, the first task information further includes a function identifier of a communication function for completing the first task.

In some implementations of the second aspect, the method further includes: The second communication apparatus determines second task information about a second task to be executed. The second task information includes a second task identifier of the second task, geographical range information of the second task, and the function identifier, and the second task includes at least one of the following: an artificial intelligence AI task or a sensing task. The second communication apparatus sends the second task information to a fourth communication apparatus.

In some implementations of the second aspect, the method further includes: The second communication apparatus receives the first feedback information from the first communication apparatus. The first feedback information indicates that the first task information is successfully accepted. The second communication apparatus receives third feedback information from the fourth communication apparatus. The third feedback information indicates that the second task information is unsuccessfully accepted.

In some implementations of the second aspect, the method further includes: The second communication apparatus sends first deletion indication information to the first communication apparatus, to indicate the first communication apparatus to delete the first task information.

In some implementations of the second aspect, the first task information further includes at least one of the following: a function identifier of a communication function for which an output of the task is to be used; a model parameter of an AI model used for the first task; an execution requirement of the first task; time range information for executing the first task; or granularity information for executing the first task.

In some implementations of the second aspect, the execution requirement includes at least one of the following: a latency parameter requirement or a reliability requirement.

In some implementations of the second aspect, the time range information includes at least one of the following: a quantity of execution times, execution duration, or trigger condition information.

In some implementations of the second aspect, the model parameter includes at least one of the following: a model identifier of the AI model corresponding to the task identifier, a first identifier of an input parameter of the AI model, or a second identifier of an output parameter of the AI model. Optionally, the second communication apparatus sends configuration information to the first communication apparatus. The configuration information includes the task identifier, the model identifier of the corresponding AI model, the first identifier of the input parameter of the AI model, or the second identifier of the output parameter of the AI model.

In some implementations of the second aspect, the model parameter includes at least one of the following: a model identifier of the AI model, an input parameter of the AI model, an output parameter of the AI model, a quantity of network layers of the AI model, or a convolution parameter of the AI model.

In some implementations of the second aspect, the first communication apparatus is any one of the following: a core network device, an access network device, or a terminal device. The second communication apparatus is any one of the following: a core network device, an access network device, or a terminal device. The third communication apparatus is any one of the following: a core network device, an access network device, or a terminal device. The fourth communication apparatus is any one of the following: a core network device, an access network device, or a terminal device.

In some implementations of the second aspect, the method further includes: The second communication apparatus sends task modification information to the first communication apparatus. The task modification information includes the first task identifier, and the task modification information further indicates an identifier of a to-be-modified parameter. The parameter may include a parameter (for example, an AI parameter) used in an execution process of the first task, or may include an execution state parameter of the first task or the like. Execution states of the task may include: not started, started, paused, stopped, and the like.

In some implementations of the second aspect, the method further includes: The second communication apparatus sends task deletion information to the first communication apparatus. The task deletion information includes the first task identifier, and the task deletion information further includes an indication about whether to retain the task configuration information.

According to a third aspect of this application, an information processing method is provided. The method includes: A first communication apparatus receives first task information that is about a task to be executed and that is from a second communication apparatus. The first task information includes a task identifier of the task, the first task information further includes a first node identifier and/or a first encapsulation protocol layer identifier, and the task includes at least one of the following: an artificial intelligence AI task or a sensing task. The first communication apparatus causes, based on the first task information, the task to be executed.

Any one of the implementations of the first aspect of this application may be implemented as any one of the implementations of the third aspect of this application.

According to a fourth aspect of this application, an information processing method is provided. The method includes: A second communication apparatus determines first task information about a first task to be executed. The first task information includes a first task identifier of the first task and a first node identifier and/or a first encapsulation protocol layer identifier, and the first task includes at least one of the following: an artificial intelligence AI task or a sensing task. The second communication apparatus sends the first task information to a first communication apparatus.

Any one of the implementations of the second aspect of this application may be implemented as any one of the implementations of the fourth aspect of this application.

According to a fifth aspect of this application, an information processing method is provided. The method includes: A first communication apparatus receives first task information that is about a task to be executed and that is from a second communication apparatus. The first task information includes a task identifier of the task and a function identifier of a communication function for which an output of the task is to be used, and the task includes at least one of the following: an artificial intelligence AI task or a sensing task. The first communication apparatus causes, based on the first task information, the task to be executed.

Any one of the implementations of the first aspect of this application may be implemented as any one of the implementations of the fifth aspect of this application.

According to a sixth aspect of this application, an information processing method is provided. The method includes: A second communication apparatus determines first task information about a first task to be executed. The first task information includes a first task identifier of the first task and a function identifier of a communication function for which an output of the task is to be used, and the first task includes at least one of the following: an artificial intelligence AI task or a sensing task. The second communication apparatus sends the first task information to a first communication apparatus.

Any one of the implementations of the second aspect of this application may be implemented as any one of the implementations of the sixth aspect of this application.

According to a seventh aspect of this application, a communication apparatus is provided. The communication apparatus includes a module or a unit configured to perform the method or steps included in any one of the first aspect or the implementations of the first aspect, any one of the third aspect or the implementations of the third aspect, or any one of the fifth aspect or the implementations of the fifth aspect.

In some implementations, the communication apparatus includes: a receiving module, configured to receive first task information that is about a task to be executed and that is from a second communication apparatus, where the first task information includes a task identifier of the task, and the task includes at least one of the following: an AI task or a sensing task; and an execution module, configured to cause, based on the first task information, the task to be executed.

In some implementations of the seventh aspect, the first task information indicates at least one of the following: geographical range information of the task; a function identifier of a communication function for which an output of the task is to be used; a model parameter of an AI model used for the task; an execution requirement of the task; time range information for executing the task; granularity information for executing the task; a node identifier; or an encapsulation protocol layer identifier.

In some implementations of the seventh aspect, the communication apparatus further includes a sending module, configured to send first feedback information to the second communication apparatus, where the first feedback information includes the task identifier.

In some implementations of the seventh aspect, the first feedback information includes at least one of the following: indication information indicating whether the first task information is successfully accepted; indication information indicating whether execution of the task has been completed; execution result information of the task; execution progress information of the task; exception information indicating that execution of the task is abnormal; or recommendation information for the task.

In some implementations of the seventh aspect, the first feedback information includes execution progress information of the task, and the receiving module is further configured to receive state query information from the second communication apparatus, where the state query information includes the task identifier.

In some implementations of the seventh aspect, the execution progress information indicates at least one of the following: completion progress information, processor capacity information, memory capacity information, electric power information, or an intermediate computing result.

In some implementations of the seventh aspect, the first task information includes the node identifier. The sending module may be configured to send, based on the node identifier, the first feedback information to a node corresponding to the node identifier.

In some implementations of the seventh aspect, the first task information includes the encapsulation protocol layer identifier. The sending module may be configured to encapsulate the first feedback information based on the encapsulation protocol layer identifier; and send encapsulated first feedback information to the second communication apparatus.

In some implementations of the seventh aspect, the execution module is further configured to: if it is determined that a first communication apparatus is outside an execution range indicated by the geographical range information, stop processing of the task or delete the task.

In some implementations of the seventh aspect, the sending module may be configured to send a notification message to the second communication apparatus, where the notification message indicates at least one of the following: The first communication apparatus is already outside the execution range, the first communication apparatus has stopped the processing of the task, or the first communication apparatus has deleted the task.

In some implementations of the seventh aspect, the first task information further includes a device identification of a third communication apparatus, and the sending module may be configured to send the first task information to the third communication apparatus, to cause the task to be executed by the third communication apparatus.

In some implementations of the seventh aspect, the receiving module is further configured to receive second feedback information from the third communication apparatus; and the sending module is configured to send the second feedback information to the second communication apparatus.

In some implementations of the seventh aspect, the second feedback information includes at least one of the following: indication information indicating whether the first task information is successfully accepted by the third communication apparatus; indication information indicating whether execution of the task has been completed; execution result information of the task; execution progress information of the task; exception information indicating execution of the task is abnormal; or recommendation information of the third communication apparatus for the task.

In some implementations of the seventh aspect, the execution requirement includes at least one of the following: a latency parameter requirement or a reliability requirement.

In some implementations of the seventh aspect, the time range information includes at least one of the following: a quantity of execution times, execution duration, or trigger condition information.

In some implementations of the seventh aspect, the model parameter includes at least one of the following: a model identifier of the AI model corresponding to the task identifier, a first identifier of an input parameter of the AI model, or a second identifier of an output parameter of the AI model.

In some implementations of the seventh aspect, the model parameter includes at least one of the following: a model identifier of the AI model, an input parameter of the AI model, and an output parameter of the AI model.

In some implementations of the seventh aspect, the communication apparatus is any one of the following: a core network device, an access network device, or a terminal device. The second communication apparatus is any one of the following: a core network device, an access network device, or a terminal device. The third communication apparatus is any one of the following: a core network device, an access network device, or a terminal device.

In some implementations of the seventh aspect, the receiving module may be configured to receive task modification information from the second communication apparatus, where the task modification information includes a first task identifier, and the task modification information further indicates an identifier of a to-be-modified parameter. The parameter may include a parameter (for example, an AI parameter) used in an execution process of a first task, or may include an execution state parameter of the first task or the like. Execution states of the task may include: not started, started, paused, stopped, and the like.

In some implementations of the seventh aspect, the receiving module may be configured to receive task deletion information from the second communication apparatus, where the task deletion information includes the first task identifier, and the task deletion information further includes an indication about whether to retain the task configuration information.

In some implementations of the seventh aspect, the execution module is further configured to delete the task based on the task deletion information.

In some implementations of the seventh aspect, the execution module is further configured to delete the task configuration information based on the task deletion information.

According to an eighth aspect of this application, a communication apparatus is provided. The apparatus includes a module or a unit configured to perform the method or steps included in any one of the second aspect or the implementations of the second aspect, any one of the fourth aspect or the implementations of the fourth aspect, or any one of the sixth aspect or the implementations of the sixth aspect.

In some implementations, the communication apparatus includes: a determining module, configured to determine first task information of a first task to be executed, where the first task information includes a first task identifier of the first task, and the first task includes at least one of the following: an Al task or a sensing task; and a sending module, configured to send the first task information to a first communication apparatus.

In some implementations of the eighth aspect, the first task information indicates at least one of the following: geographical range information of the first task; a function identifier of a communication function for which an output of the first task is to be used; a model parameter of an AI model used for the first task; an execution requirement of the first task; time range information for executing the first task; granularity information for executing the first task; a first node identifier; or a first encapsulation protocol layer identifier.

In some implementations of the eighth aspect, the communication apparatus further includes a receiving module, configured to receive first feedback information from the first communication apparatus, where the first feedback information includes the first task identifier.

In some implementations of the eighth aspect, the first feedback information includes at least one of the following: indication information indicating whether the first task information is successfully accepted by the first communication apparatus; indication information indicating whether execution of the first task has been completed; execution result information of the first task; execution progress information of the first task; exception information indicating that execution of the first task is abnormal; or recommendation information of the first communication apparatus for the first task.

In some implementations of the eighth aspect, the first feedback information includes the execution progress information of the first task, and the sending module is further configured to send state query information to the first communication apparatus, where the state query information includes the first task identifier.

In some implementations of the eighth aspect, the execution progress information indicates at least one of the following: completion progress information, processor capacity information, memory capacity information, electric power information, or an intermediate computing result.

In some implementations of the eighth aspect, the receiving module is configured to receive a notification message from the first communication apparatus, where the notification message indicates at least one of the following: The first communication apparatus is already outside an execution range indicated by the geographical range information, the first communication apparatus has stopped processing of the first task, or the first communication apparatus has deleted the first task.

In some implementations of the eighth aspect, the first task information further includes an identification of a third communication apparatus, to indicate the first communication apparatus to send the first task information to the third communication apparatus.

In some implementations of the eighth aspect, the determining module is further configured to determine second task information about a second task to be executed, where the second task information includes a second task identifier of the second task and an algorithm identifier, and the second task includes at least one of the following: an artificial intelligence AI task or a sensing task; and the sending module is further configured to send the second task information to a fourth communication apparatus. Optionally, the second task information may indicate at least one of the following: geographical range information of the second task, a function identifier of a communication function for which an output of the second task is to be used; a model parameter of an AI model used for the second task; an execution requirement of the second task; time range information for executing the second task; granularity information for executing the second task; a second node identifier; or a second encapsulation protocol layer identifier.

In some implementations of the eighth aspect, the receiving module is configured to: receive first feedback information from the first communication apparatus, where the first feedback information indicates that the first task information is successfully accepted; and receive third feedback information from the fourth communication apparatus, where the third feedback information indicates that the second task information is unsuccessfully accepted.

In some implementations of the eighth aspect, the sending module is further configured to send first deletion indication information to the first communication apparatus, to indicate the first communication apparatus to delete the first task information.

In some implementations of the eighth aspect, the execution requirement includes at least one of the following: a latency parameter requirement or a reliability requirement.

In some implementations of the eighth aspect, the time range information includes at least one of the following: a quantity of execution times, execution duration, or trigger condition information.

In some implementations of the eighth aspect, the model parameter includes at least one of the following: a model identifier of the AI model corresponding to the first task identifier, a first identifier of an input parameter of the AI model, or a second identifier of an output parameter of the AI model.

In some implementations of the eighth aspect, the model parameter includes at least one of the following: a model identifier of the AI model, an input parameter of the AI model, an output parameter of the AI model, a quantity of network layers of the AI model, or a convolution parameter of the AI model.

In some implementations of the eighth aspect, the first communication apparatus is any one of the following: a core network device, an access network device, or a terminal device. The communication apparatus is any one of the following: a core network device, an access network device, or a terminal device. The third communication apparatus is any one of the following: a core network device, an access network device, or a terminal device. The fourth communication apparatus is any one of the following: a core network device, an access network device, or a terminal device.

In some implementations of the eighth aspect, the sending module is further configured to send task modification information to the first communication apparatus, where the task modification information includes the first task identifier, and the task modification information further indicates an identifier of a to-be-modified parameter. The parameter may include a parameter (for example, an AI parameter) used in an execution process of the first task, or may include an execution state parameter of the first task or the like. Execution states of the task may include: not started, started, paused, stopped, and the like.

In some implementations of the eighth aspect, the sending module is further configured to send task deletion information to the first communication apparatus, where the task deletion information includes the first task identifier, and the task deletion information further includes an indication about whether to retain the task configuration information.

According to a ninth aspect of this application, a communication apparatus is provided. The communication apparatus includes a processor and a memory. The memory stores instructions executed by the processor. When the instructions are executed by the processor, the communication apparatus is caused to implement the method or steps included in any one of the first aspect or the implementations of the first aspect, any one of the third aspect or the implementations of the third aspect, or any one of the fifth aspect or the implementations of the fifth aspect.

In some implementations of the ninth aspect, the communication apparatus further includes a transceiver, to implement data transmission with another communication apparatus.

In some implementations of the ninth aspect, the memory may be integrated with the processor.

According to a tenth aspect of this application, a communication apparatus is provided. The communication apparatus includes a processor and a memory. The memory stores instructions executed by the processor. When the instructions are executed by the processor, the communication apparatus is caused to implement the method or steps included in any one of the second aspect or the implementations of the second aspect, any one of the fourth aspect or the implementations of the fourth aspect, or any one of the sixth aspect or the implementations of the sixth aspect.

In some implementations of the tenth aspect, the communication apparatus further includes a transceiver, to implement data transmission with another communication apparatus.

According to an eleventh aspect of this application, a computer-readable storage medium is provided. The computer-readable storage medium stores computer-executable instructions. When the computer-executable instructions are executed by a processor, an operation of the method in any one of the first aspect to the sixth aspect or the implementations of the first aspect to the sixth aspect is implemented.

According to a twelfth aspect of this application, a chip or a chip system is provided. The chip or the chip system includes a processing circuit, configured to perform an operation of the method in any one of the first aspect to the sixth aspect or the implementations of the first aspect to the sixth aspect.

According to a thirteenth aspect of this application, a computer program or a computer program product is provided. The computer program or the computer program product is tangibly stored in a computer-readable medium and includes computer-executable instructions. When the computer-executable instructions are executed, an operation of the method in any one of the first aspect to the sixth aspect or the implementations of the first aspect to the sixth aspect is implemented.

### BRIEF DESCRIPTION OF DRAWINGS

The foregoing and other features, advantages, and aspects of embodiments of this application become clearer with reference to the accompanying drawings and the following detailed descriptions. In the accompanying drawings, same or similar reference numerals indicate same or similar elements.
FIG. 1 is a diagram of information transfer on a control plane and on a user plane between the terminal device and the access network device;
FIG. 2 is a diagram of a scenario to which an embodiment of this application is applicable;
FIG. 3 is a schematic interaction flowchart of an information processing process according to some embodiments of this application;
FIG. 4 is a schematic interaction flowchart of an information processing process according to some embodiments of this application;
FIG. 5 is a schematic interaction flowchart of an information processing process according to some embodiments of this application;
FIG. 6 is a schematic interaction flowchart of an information processing process according to some embodiments of this application;
FIG. 7 is a schematic interaction flowchart of an information processing process according to some embodiments of this application;
FIG. 8 is a schematic interaction flowchart of an information processing process according to some embodiments of this application;
FIG. 9 is a schematic interaction flowchart of an information processing process according to some embodiments of this application;
FIG. 10 is a schematic interaction flowchart of an information processing process according to some embodiments of this application;
FIG. 11 is a schematic interaction flowchart of an information processing process according to some embodiments of this application;
FIG. 12 is a block diagram of a communication apparatus according to some embodiments of this application;
FIG. 13 is a block diagram of a communication apparatus according to some embodiments of this application; and
FIG. 14 is a block diagram of an example device that may be configured to implement an embodiment of this application.

### DESCRIPTION OF EMBODIMENTS

The following describes embodiments of this application in more detail with reference to the accompanying drawings. Although some embodiments of this application are shown in the accompanying drawings, it should be understood that this application may be implemented in various forms and should not be construed as being limited to embodiments described herein, and instead, these embodiments are provided for a more thorough and complete understanding of this application. It should be understood that the accompanying drawings and embodiments of this application are merely used as examples, but are not used to limit the scope of the protection of this application.

In the descriptions of embodiments of this application, the term "include" and similar terms thereof should be understood as open inclusion, that is, "include but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

Embodiments of this application may be implemented according to any proper communication protocol, including but not limited to a cellular communication protocol, such as 3rd generation (3rd Generation, 3G), 4th generation (4th generation, 4G), 5th generation (5th generation, 5G), or 6th generation (6th generation, 6G) evolved after 5G, a wireless local area network communication protocol such as an Institute of Electrical and Electronics Engineers (Institute of Electrical and Electronics Engineers, IEEE) 802.11, and/or any other protocol known or developed in the future.

The technical solutions in embodiments of this application are applied to a communication system that complies with any proper communication protocol, for example, a long term evolution (Long Term Evolution, LTE) system, a frequency division duplex (Frequency Division Duplex, FDD) system, a time division duplex (Time Division Duplex, TDD) system, a 5G system such as a new radio (New Radio, NR) system, a system such as 6G evolved after 5G, or a short-distance communication system such as wireless fidelity (Wireless Fidelity, Wi-Fi). It should be understood that the foregoing communication system is merely an example. Embodiments of this application are not limited to the enumerated communication system, but are applicable to any communication system, for example, a wireless communication system, a wired communication system, a communication system integrating a plurality of wireless technologies, or another communication system developed in the future.

The term "terminal device" used in this application refers to any terminal device that can perform wired or wireless communication with a network device or between terminal devices. The terminal device may sometimes be referred to as user equipment (User Equipment, UE). The terminal device may be any type of mobile terminal, fixed terminal, or portable terminal. For example, the terminal device may be a mobile phone, a station, a unit, a device, a mobile terminal (Mobile Terminal, MT), a subscription station, a portable subscription station, an internet node, a communicator, a desktop computer, a laptop computer, a notebook computer, a tablet computer, a personal communication system device, a personal navigation device, a personal digital assistant (Personal Digital Assistant, PDA), a positioning device, a radio broadcast receiver, an e-book device, a game device, an internet of things (Internet of Things, loT) device, a vehicle-mounted device, an airplane, a communication device carried on a high-altitude aircraft, an uncrewed aerial vehicle, a robot, a virtual reality (Virtual Reality, VR) device, an augmented reality (Augmented Reality, AR) device, a wearable device, a terminal in device-to-device (device-to-device, D2D) communication, a terminal in vehicle to everything (vehicle to everything, V2X), a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a terminal device in a 5G network or any terminal device in an evolved public land mobile network (Public Land Mobile Network, PLMN), another device that can be used for communication, or any combination thereof. This is not limited in embodiments of this application.

The term "access network device" used in this application is a physical entity or a logical node that may be configured to communicate with the terminal device. The access network device may be an apparatus that is deployed in a radio access network (Radio Access Network, RAN) and that provides a wireless communication function for the mobile terminal. The access network device may include various types of base stations. In an example, the access network device may include various forms of macro base stations, micro base stations, pico base stations, femto base stations, relay stations, access points, remote radio units (Remote Radio Units, RRUs), radio heads (Radio Heads, RHs), remote radio heads (Remote Radio Heads, RRHs), active antenna units (Active Antenna Units, AAUs), and the like. In systems using different radio access technologies, the access network device may have different names. For example, the access network device is referred to as an evolved NodeB (evolved NodeB, eNB or eNodeB) in an LTE system, is referred to as a NodeB (NodeB, NB) in a 3G network, and may be referred to as a g NodeB (gNB) or an NR NodeB (NR NB) in a 5G network. In some scenarios, the access network device may include a central unit (Central Unit, CU) and/or a distributed unit (Distributed Unit, DU). The CU and the DU may be deployed in different places. For example, the DU is remotely deployed in a high-traffic area, and the CU is deployed in a central equipment room. Alternatively, the CU and the DU may be deployed in a same equipment room. The CU and the DU may alternatively be different components in a same rack. In some scenarios, the access network device may alternatively be implemented as a transmission and reception point (Transmission and Receiver Point, TRP). The access network device may alternatively be an access point (access point, AP) in a Wi-Fi system, a transmitting point (transmitting point, TP), a mobile switching center, a network device (which may be deployed on a high-altitude platform or a satellite) in a non-terrestrial communication network (non-terrestrial network, NTN) communication system, a device that undertakes a base station function in device-to-device (Device-to-Device, D2D), V2X, or machine-to-machine (machine-to-machine, M2M) communication, or the like. The access network device may be responsible for functions, such as a radio link maintenance function, a radio resource management function, and a part of mobility management functions, related to an air interface. The radio link maintenance function is used to maintain a radio link with the terminal device, and is responsible for protocol conversion between radio link data and IP data. The radio resource management function includes radio link setup and release, radio resource scheduling and allocation, and the like. The part of mobility management functions include configuring the terminal device to perform measurement, evaluating quality of a radio link of the terminal device, and determining inter-cell handover of the terminal device.

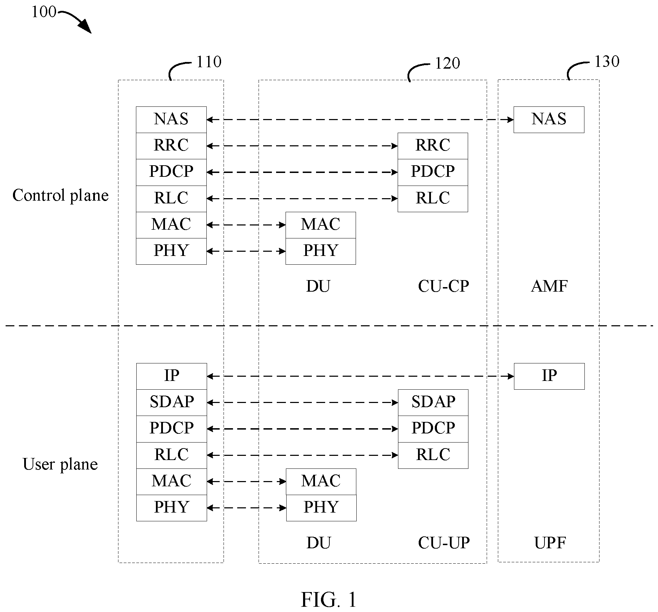

A protocol stack corresponding to the terminal device may include a physical (physical, PHY) layer, a media access control (Medium Access Control, MAC) layer, a radio link control (Radio link control, RLC) layer, a packet data convergence protocol (Packet Data Convergence Protocol, PDCP) layer, a radio resource control (Radio Resource Control, RRC) layer, a service data adaptation protocol (Service Data Adaptation Protocol, SDAP) layer, and a non-access stratum (non-access stratum, NAS). The protocol stack may include a user plane (user plane, UP) protocol and a control plane (control plane, CP) protocol. A protocol stack corresponding to the access network device may also include a UP protocol and a CP protocol. Layers between the terminal device may be connected to each other and layers between the access network device may be connected to each other, so that information transfer is performed. FIG. 1 is a diagram of a scenario 100 of information transfer on a control plane and on a user plane between the terminal device 110 and the access network device 120 or the core network device 130. In FIG. 1, the access network device 120 on the control plane includes a DU and a CU-CP, and the access network device 120 on the user plane includes a DU and a CU-UP. The core network device 130 on the control plane includes an access and mobility management function (Access and Mobility Management Function, AMF), and the core network device 130 on the user plane includes a user plane function (User Plane Function, UPF). It may be understood that FIG. 1 is merely an example. In an actual scenario, the access network device 120 may further include a CU, and the core network device 130 may further include a session management function (Session Management Function, SMF) and the like.

The term "core network" used in this application belongs to a core part of a mobile communication network. The core network plays a role of connecting the foregoing and the following, and is mainly responsible for processing core functions of mobility management, session management, and data transmission of a terminal device. The core network part is located in a network subsystem, and may relay a call request or a data request to different networks through an air interface. The core network mainly has functions of providing a user connection, user management, and a service bearer connection, and functions as a bearer network to provide an interface to an external network. Establishment of the user connection includes mobility management (Mobility Management, MM), call management (Call Management, CM), switching/routing, and other functions. The user management includes user description, quality of service (Quality of Service, QoS), a virtual home environment (virtual home environment, VHE), security, and the like. Corresponding security measures provided by an authentication center include security management over a mobile service and security processing for access of the external network. The bearer connection includes a public switched telephone network (Public Switched Telephone Network, PSTN) to the outside, an external circuit data network and a packet data network, an internet (Internet), an enterprise intranet (Intranet), and the like. Basic services that can be provided by the core network include mobile office, e-commerce, communication, an entertainment service, a travel and location-based service, a remote sensing service (Telemetry) service, a simple message transfer service, and the like.

For example, a 5G core network includes, based on an evolved packet core (Evolved Packet Core, EPC), enhancement in at least three aspects, that is, a service-based architecture, support for network slicing, and separation of a control plane and a user plane.

Different types of services with different requirements may be provided through the network slicing. An enhanced mobile broadband (Enhance Mobile Broadband, eMBB) service further improves user experience and other performance based on an existing mobile broadband service scenario, for example, an application scenario in which a user watches a high-definition video, AR, VR, or the like. An ultra-reliable and low-latency communication (Ultra-Reliable and Low-Latency Communication, URLLC) service involves high reliability, low latency, and excessively high availability. For example, the ultra-reliable and low-latency communication service is applicable to industrial application and control, traffic safety and control, remote manufacturing, remote training, remote surgery, and the like. URLLC has great potential in a self driving service. For example, a key technology of a V2X intelligent transportation system enables communication between vehicles, between a vehicle and an access network device, and between a vehicle and a terminal device, to obtain a series of traffic information such as a real-time road condition and road information, thereby improving driving safety, reducing congestion, improving traffic efficiency, and providing vehicle-mounted entertainment information. Machine-type communication (Machine-Type Communication, MTC) has advantages of low costs, strong coverage, and the like. Narrow band-internet of thing (Narrow Band-Internet of Thing, NB-IoT) has characteristics of wide coverage, many connections, a low rate, low costs, low power consumption, an excellent architecture, and the like, for example, massive connections, lower power consumption, and lower chip costs. The NB-IoT is applied to a smart water meter, smart parking, smart pet tracking, a smart bicycle, a smart smoke detector, a smart toilet, a smart vending machine, and the like.

This embodiment of this application is applicable to communication between various communication devices, including but not limited to communication between a terminal device and an access network device, communication between terminal devices, communication between an access network device and a core network device, and the like. This embodiment of this application is applicable to both a homogeneous network and a heterogeneous network. This embodiment of this application is applicable to a low-frequency communication scenario, a high-frequency communication scenario, an optical communication scenario, and the like.

With development of communication technologies, in a communication system, AI begins to be supported through a network data analysis functionality (Network Data Analysis Functionality), such as data collection and data analysis at an application layer, for example, to provide external services and interface invoking. However, Al-related procedures and functions are not supported currently.

In view of this, this application provides an information processing solution, which is applicable to a communication system, so that the communication system can natively support the Al, thereby providing, in a mobile network, a complete AI environment, including a computing power, an algorithm, data, and various other aspects.

In this embodiment of this application, a task may be used as a center of Al-related communication, and the task may be computing, inference, training, sensing, or the like.

In comparison with session management, more resources, such as a computing power, an algorithm, and data, are added to use of the Al, and correspondingly, a task anchor and a task executor are introduced, where the task anchor performs corresponding life cycle management on the task executor. A single task may be completed by a single task executor, or may be completed by two or more task executors in collaboration.

In other words, management over the task involves two logical functions: a task management and control function of the task anchor and a task execution function of the task executor. The task management and control function is mainly responsible for managing and controlling a task resource of the task executor, to manage and control a life cycle of each task. In addition, the task execution function means execution of a specific task, for example, execution of an AI inference task or execution of an AI training task. A same logical entity (also referred to as a logical node) may have both the task execution function and the task management and control function. For example, after receiving a task allocated by an upper-level node, if the logical node determines that the logical node cannot complete the task on time, the task execution function may notify the task management and control function in the logical node through an internal interface, so that the task management and control function performs secondary decomposition on the task, and manages a related task resource of a lower-level execution node of the logical node. However, it should also be understood that the logical entity may have only the task management and control function. For example, the logical entity does not have a sufficient computing power and does not participate in execution of the task, and is only responsible for further decomposing the task to a logical node managed by the logical entity, and remaining logical nodes perform execution of the task. The logical entity may have only the task execution function but not the task management and control function. For example, the logical entity cannot perform secondary decomposition and/or mapping of the task.

A logical function of the task anchor (task management and control) may include at least one of the following: collaboration for the task, resource scheduling and allocation for the task, management and control over the task, or the like.

For example, the collaboration for the task may include decomposition and/or combination of the task. For example, the secondary decomposition may be performed on the task, to select more logical nodes to participate in the execution of the task. For example, execution results of a plurality of logical nodes may be combined and then reported to the task anchor. The collaboration for the task may include selection of a logical node (also referred to as an execution node) for executing the task or task mapping. For example, the execution node may be selected based on a user policy or in a random manner, and a task configuration is further delivered.

For example, resource scheduling and allocation for the task may include scheduling resources of each execution node. For example, states of resources, including but not limited to a computing power, an algorithm, data, a connection, sensing, and the like, of each execution node may be obtained. In addition, the task may also be used as a granularity, and resources such as the computing power, the algorithm, the data, and the connection that are related to the task may be further scheduled, and QoS and/or a key performance indicator (Key Performance Indicator, KPI) related to the task may be monitored, to ensure smooth execution of the task. Specifically, resource management and control includes resource control and management over a logical node having a computing power capability. For example, the task is used as a granularity, and resource management over the computing power includes computing power capability negotiation, computing power registration/reporting, a computing power request, and the like. Resource management over the algorithm includes algorithm capability negotiation, AI model management (including single-node AI model configuration, combined AI model configuration, model reconfiguration, reconfiguration of segmentation points of an AI model, and AI model compression), and the like. Resource management over the data includes data capability negotiation, data collection, data security configuration, configuration of a data compression manner, and the like. Resource management over the connection includes establishment of a dedicated bearer of the task, configuration of a dedicated protocol stack of the task, definition of a QoS mechanism of the task, and the like.

For example, the management and control over the task includes life cycle management over the task, for example, the management may be performed using management signaling or control signaling. For example, the management and control over the task may include adding, modification, deletion, query, reporting, and the like.

Correspondingly, a logical function of the task executor may correspond to the logical function of the task anchor. For example, a capability, a state, information, exception information, a result, and the like of a task resource may be reported to the task anchor. For example, a related operation, for example, accepting/rejecting a resource request of the task anchor may be performed based on task management and control of the task anchor.

The following describes relatively detailed embodiments of this application with reference to the accompanying drawings.

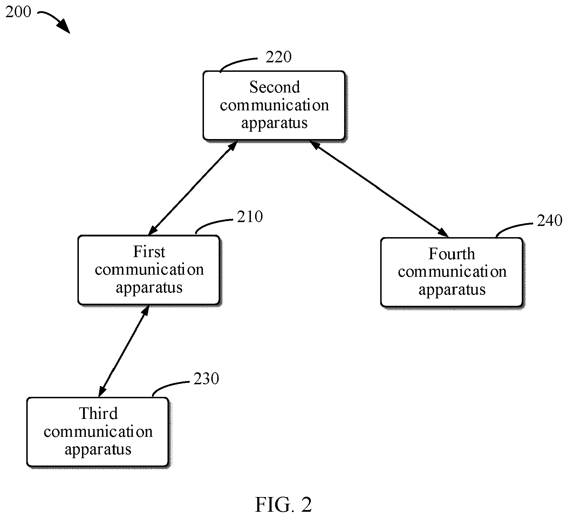

FIG. 2 is a diagram of a scenario 200 to which an embodiment of this application is applicable. In the scenario 200, a first communication apparatus 210 and a second communication apparatus 220 that directly or indirectly communicates with the first communication apparatus 210 are shown. In addition, FIG. 2 further shows a third communication apparatus 230 and a fourth communication apparatus 240.

In some embodiments, the second communication apparatus 220 may be the foregoing task anchor, and at least one of the first communication apparatus 210, the third communication apparatus 230, and the fourth communication apparatus 240 may be the foregoing task executor.

Implementation forms of the first communication apparatus 210, the second communication apparatus 220, the third communication apparatus 230, and the fourth communication apparatus 240 are not limited in this embodiment of this application. For example, the first communication apparatus 210, the second communication apparatus 220, the third communication apparatus 230, and the fourth communication apparatus 240 each may be implemented as any one of a core network device, an access network device, or a terminal device.

In this embodiment of this application, there is an interface between devices, and the interface is used for information transmission, signaling transmission, and the like. It may be understood that a type of the interface is related to a type of a device. For example, an interface between access network devices may be, for example, an Xn interface, and correspondingly, a message transmitted between the access network devices may be an Xn message. For example, an interface between a CU and a DU may be, for example, an F1 interface, and correspondingly, a message transmitted between the CU and the DU may be an F1 message. For example, an interface between a control plane and a user plane may be, for example, an E1 interface, and correspondingly, a message transmitted between the control plane and the user plane may be an E1 message. For example, an interface between a core network device and an access network device may be, for example, an Ng interface, and correspondingly, a message transmitted between the core network device and the access network device may be an Ng message. For example, an interface between terminal devices may be, for example, a sidelink (sidelink, SL) interface, and correspondingly, a message transmitted between the terminal devices may be an SL message.

For ease of descriptions, in the following embodiments, it is assumed that the second communication apparatus 220 is an access network device, and it is assumed that the first communication apparatus 210, the third communication apparatus 230, and the fourth communication apparatus 240 are terminal devices. However, it should be understood that this application is not limited thereto. In an actual scenario, the first communication apparatus 210, the second communication apparatus 220, the third communication apparatus 230, the fourth communication apparatus 240, and the like that are in the scenario 200 each may be implemented as any type of network element.

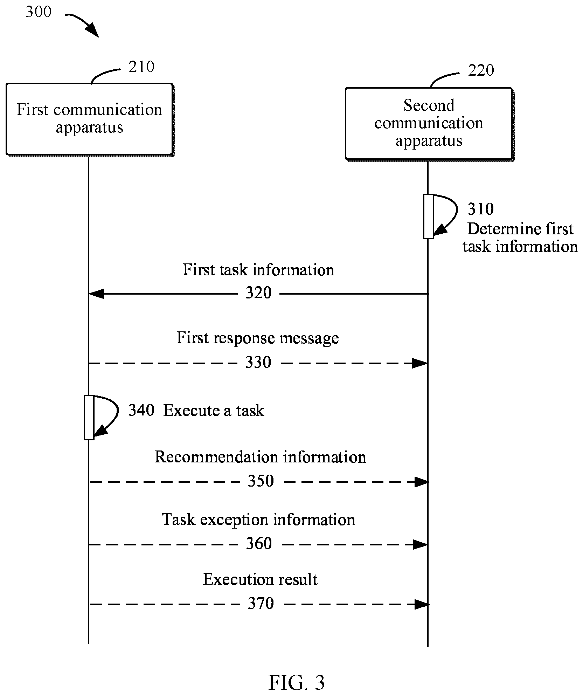

The following describes embodiments of this application in detail with reference to descriptions in FIG. 3 to FIG. 11.

FIG. 3 is a schematic interaction flowchart of an information processing process 300 according to some embodiments of this application. The process 300 involves a first communication apparatus 210 and a second communication apparatus 220.

The second communication apparatus 220 determines 310 first task information about a first task to be executed. The first task information may include a first task identifier of the first task, and the first task includes an AI task and/or a sensing task.

Optionally, the AI task may include AI training, AI inference, and the like. For example, the AI task may include a single-node machine learning task, a single-node AI computing task, a multi-node federated learning task, a multi-node collaborative computing task, and the like. For example, the sensing task may be environment sensing, ranging, speed testing, or the like.

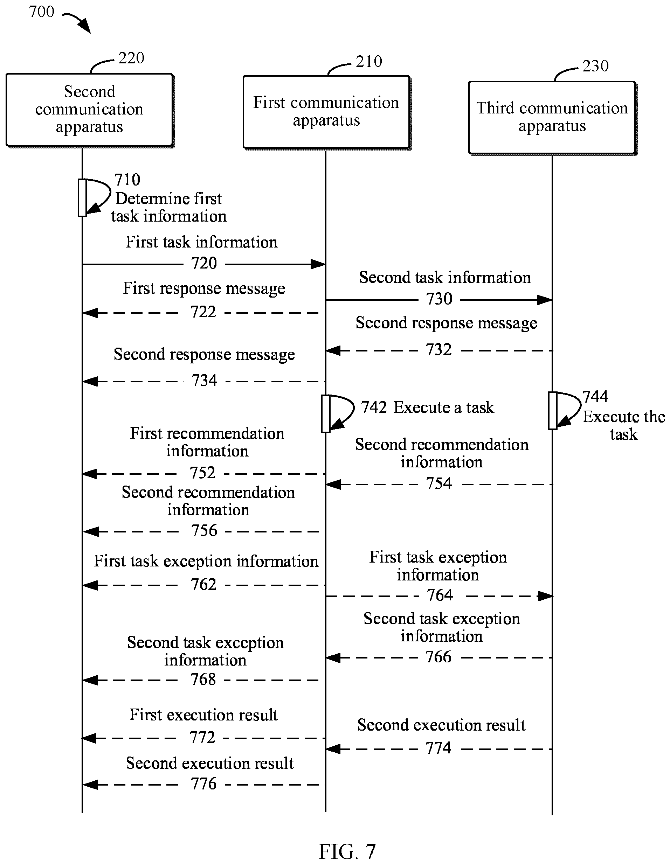

In some embodiments, the first task may be a single-node task, to be specific, a task executed by a single task executor (for example, the first communication apparatus 210). For example, the first task may be completing an adaptive modulation and coding (Adaptive Modulation and coding, AMC) algorithm. In some other embodiments, the first task may be a task collaborated by two or more nodes, for example, a task executed by at least two task executors. Optionally, the first task information may include indication information (for example, 1 bit) about whether the first task is a single-node task. In an example, the task involved in the process 300 may be considered as a single-node task. For an embodiment in which a task is executed by at least two task executors, refer to the following descriptions with reference to FIG. 7 to FIG. 11.

For example, the first task information may be referred to as task configuration information, which is, for example, included in a task configuration message. The first task information may include at least one of the following: the first task identifier of the first task; geographical range information of the first task; a function identifier of a communication function for which an output of the first task is to be used; a model parameter of an AI model used for the first task; an execution requirement of the first task; time range information for executing the first task; or granularity information for executing the first task. Optionally, the first task information may include a node identifier and/or an encapsulation protocol layer identifier, to indicate a path over which or a protocol layer at which the first communication apparatus 210 sends feedback to the second communication apparatus 220.

The geographical range information of the first task may indicate a geographical range in which the first task is executed, for example, may include one or more parameters of a cell identity, an access network device identifier of a cell, a radius or diameter of a cell, and coordinate information of the geographical range. Therefore, a task executor located in the geographical range indicated by the geographical range information may execute the task based on the task configuration information. Optionally, in some embodiments, the first task information may further include indication information of an operation to be performed by the task executor when the task executor is outside the geographical range indicated by the geographical range information. For example, the indication information indicates the task executor that is outside the geographical range to delete the first task. For example, the first task information indicates the task executor that is outside the geographical range to report corresponding information. In this manner, the second communication apparatus 220 may indicate, by using the geographical range information, the geographical range in which the task is executed, to implement management and control over the task, and ensure that the first communication apparatus located in the indicated geographical range can correctly execute the task.

In a possible implementation, the second communication apparatus 220 obtains location information of one or more communication apparatuses, and determines, based on the location information, the first communication apparatus 210 that matches the geographical range information of the first task. For example, a communication apparatus within the geographical range in which the first task is executed is selected as the first communication apparatus 210; or a communication apparatus that is about to enter the geographical range in which the first task is executed is selected as the first communication apparatus 210. Optionally, the first communication apparatus 210 may be determined using the geographical range in which the first task is executed and a first threshold.

The function identifier of the communication function for which the output of the first task is to be used may be used to associate the first task with the communication function. For example, the communication function may be an AMC algorithm, cell handover, channel state information (channel state information, CSI) computation, multiple-input multiple-output (Multi-input Multi-output, MIMO), reference signal (Reference Signal) sending, or the like. Optionally, the function identifier may also be referred to as an algorithm identifier, another name, or the like. This is not limited in this application.

The model parameter of the AI model used for the first task may indicate the AI model used for executing the first task. For example, the model parameter may include at least one of the following: a model identifier, an input parameter, and an output parameter. For example, when the output parameter of the AI model corresponding to the model identifier is predefined or preconfigured, the model parameter included in the first task information may not include the output parameter. In this way, signaling overheads can be reduced. Optionally, the input parameter may be a parameter acquired or determined by the task executor. Alternatively, optionally, the input parameter may be a parameter indicated by the second communication apparatus 220, for example, may be data offloading (offloading) of a central processing unit (Central Processing Unit, CPU).

In a possible implementation, the second communication apparatus 220 may preconfigure one or more AI models. To be specific, the task executor may have one or more AI models, one or more groups of input parameters, one or more groups of output parameters, and the like that are prestored.

In this case, the model parameter in the first task information may include at least one of the following: the model identifier, a first identifier of the input parameter, and a second identifier of the output parameter. In this case, the task executor may determine a model structure, the input parameter, the output parameter, and the like of the AI model based on the corresponding identifiers, and does not need transmission of an actual input parameter and/or an actual output parameter, thereby greatly reducing the signaling overheads. In an example, the model parameter may include only the model identifier, and the task executor (for example, the first communication apparatus 210) can obtain, based on a preconfigured or prestored correspondence, the input parameter, the output parameter, and the like that correspond to the model identifier. In this way, the signaling overheads can be further reduced.

In this manner, the AI model in this embodiment of this application may be decoupled from the first task, and the AI model is also applicable to another task. For example, the AI model is indicated in task configuration information of another task by using the model identifier. In this way, separately configuring an AI model for each task can be avoided, thereby reducing the signaling overheads.

The execution requirement of the first task may indicate a requirement that should be met when the task executor executes the first task. Optionally, the execution requirement may also be referred to as a QoS requirement. For example, the execution requirement may include a latency parameter requirement and/or a reliability requirement. An AI single-node inference task is used as an example, the latency parameter requirement may be represented as, for example, 3 milliseconds (3 ms), and the reliability requirement may be represented as, for example, 99.99%.

The time range information for executing the first task may indicate a time limit for executing the first task. For example, the time range information may include at least one of the following: a quantity of execution times, execution duration, trigger condition information, and the like. For example, if the time range information includes the execution duration, the task executor may start a timer when receiving the first task information, to determine whether the execution duration expires. For example, the time range information includes the quantity of execution times, which may be, for example, one or more times. For example, the time range information includes an execution cycle and the execution duration, so that the task executor can execute the task once or more times within the execution duration based on the execution cycle. Optionally, in this manner, the quantity of execution times may be implicitly indicated using the execution cycle and the execution duration. For example, the time range information includes an identifier of a specific event and the execution duration, so that the task executor can execute the first task within the execution duration based on the specific event. For example, the time range information may include the trigger condition information, which, for example, indicates whether the first task is executed in real time. In an example, the trigger condition information indicates "real-time". In this case, in response to receiving the first task information, the task executor may start to execute the task. Optionally, the task executor may return a task execution result to the second communication apparatus 220. In this manner, the second communication apparatus 220 may indicate execution time, for example, start time, duration, or end time of the task by using the time range information, to manage and control the execution of the task.

The granularity information for executing the first task may indicate a granularity of a device to which the first task is applied. For example, the granularity information may indicate that a terminal device is used as a granularity, and optionally, may further carry an identifier of the terminal device. For example, the granularity information may indicate that a type of the terminal device is used as a granularity, and optionally, may further carry a type identifier, for example, at least one of the following: an eMBB, URLLC, a quantity of antennas, a speed range, a reference signal received power (Reference Signal Received Power, RSRP) range, a reference signal received quality (Reference Signal Received Quality, RSRQ) range, a signal to interference plus noise ratio (Signal to Interference plus Noise Ratio, SINR) range, a CSI range, a value of a rank (RANK) indicating channel correlation, a logical channel (Logical Channel, LCH) identifier, a logical channel group (Logical Channel Group, LCG) identifier, a QoS identifier, and the like, where the QoS identifier may be, for example, a QoS flow identifier (QoS Flow Identifier, QFI). For example, the granularity information may indicate that a cell is used as a granularity, and optionally, may further carry a cell identity, and optionally, may further carry an identifier of a target cell during cell handover. For example, the granularity information may indicate that an access network device is used as a granularity, and optionally, may further carry an identifier of the access network device. For example, the granularity information may indicate that an area is used as a granularity, and optionally, may further include tracking area code (Tracking Area Code, TAC), radio access network area code (Radio Access Network Area Code, RANAC), or the like.

The node identifier may indicate a logical module or a physical entity of the second communication apparatus 220. For example, the second communication apparatus 220 is an access network device, and the node identifier may indicate a CU, a DU, a CU-CP, a CU-UP, a base station, or the like. Alternatively, for example, the second communication apparatus 220 is a core network device, and has, for example, an access and mobility management function, a user plane function, or a session management function.

The encapsulation protocol layer identifier may indicate a specific protocol layer, for example, a physical layer, a MAC layer, or an RRC layer.

It should be noted that specific forms of various indications in the task configuration message are not limited in this embodiment of this application. For example, a specific field in control signaling may be used for an explicit or implicit indication. For example, a payload (payload) in data may be used for an indication.

The second communication apparatus 220 sends 320 the first task information to the first communication apparatus 210.

For example, the first task information may be carried in communication signaling. A specific form of the signaling may depend on a device type of the second communication apparatus 220 and a device type of the first communication apparatus 210, as described above with reference to FIG. 2. For brevity, details are not described herein again. It is assumed that the second communication apparatus 220 is an access network device, and the first communication apparatus 210 is a terminal device. Optionally, the signaling may be at least one of the following: physical layer signaling, MAC layer signaling, RRC layer signaling, and the like.

For example, it is assumed that the first communication apparatus 210 is a terminal device in an idle state. In this case, the signaling may be broadcast system information, for example, a system information block (System Information Block, SIB). For example, it is assumed that the first communication apparatus 210 is a terminal device in a connected (connected) state. In this case, the signaling may be an RRC reconfiguration message. For example, it is assumed that the first communication apparatus 210 is a terminal device in an inactive state. In this case, the signaling may be an RRC release message. It may be understood that the first communication apparatus 210 may not enter the inactive (inactive) state after receiving the RRC reconfiguration message, and the first communication apparatus 210 may enter the inactive state or the idle state after receiving the RRC release message.

Correspondingly, it may be understood that the first communication apparatus 210 receives signaling from the second communication apparatus 220, and the signaling includes the first task information.

For example, the first communication apparatus 210 may send first feedback information to the second communication apparatus 220. The first feedback information includes the first task identifier of the first task, and the first feedback information may indicate at least one of the following: indication information indicating whether the first task information is successfully accepted by the first communication apparatus 210; indication information indicating whether execution of the task has been completed; execution result information of the task; execution progress information of the task; exception information indicating that execution of the task is abnormal; or recommendation information of the first communication apparatus 210 for the task.

For example, if the first task information includes the node identifier, that the first communication apparatus 210 sends first feedback information to the second communication apparatus 220 may include: The first communication apparatus 210 sends the first feedback information to a node that is in the second communication apparatus 220 and that corresponds to the node identifier. For example, if the node indicated by the node identifier is a CU, the first communication apparatus 210 sends the first feedback information to the CU of the second communication apparatus 220.

For example, if the first task information includes the encapsulation protocol layer identifier, the first communication apparatus 210 may encapsulate the to-be-sent first feedback information based on the encapsulation protocol layer identifier, and send encapsulated first feedback information to the second communication apparatus 220. For example, it is assumed that the second communication apparatus 220 is an access network device, and the encapsulation protocol layer identifier indicates a physical layer. In this case, the first communication apparatus 210 may encapsulate the first feedback information at the physical layer, and send the encapsulated first feedback information to the second communication apparatus 220 (for example, a DU) by using physical layer signaling. For example, it is assumed that the second communication apparatus 220 is an access network device, and the encapsulation protocol layer identifier indicates an RRC layer. In this case, the first communication apparatus 210 may encapsulate the first feedback information at the RRC layer, and send the encapsulated first feedback information to the second communication apparatus 220 (for example, a CU-CP) by using RRC signaling.

Optionally, different content indicated by the first feedback information may be carried in a same message or same signaling, or may be carried in different messages or different signaling. For ease of descriptions, the different content indicated by the first feedback information is separately described in detail in the following embodiments. However, it should be understood that, in an actual scenario, various information in the following embodiments may be carried in same signaling. For example, in an embodiment in which the first communication apparatus 210 is a terminal device and the second communication apparatus 220 is an access network device, the first feedback information may be transmitted on an uplink control channel or may be transmitted on an uplink shared channel. This is not limited in this application.

Optionally, as shown in FIG. 3, the first communication apparatus 210 sends 330 a first response message for the signaling to the second communication apparatus 220. For example, the first feedback information may indicate the indication information indicating whether the first task information is successfully accepted by the first communication apparatus 210, and the indication information may be included in the first response message.

In some embodiments, the first feedback information may indicate whether the first communication apparatus 210 successfully receives the signaling, for example, may be an acknowledgment (ACK) or a negative acknowledgment (NACK). In some embodiments, the first feedback information may indicate whether the first communication apparatus 210 accepts the first task, for example, may be accept (accept) or reject (reject). In some embodiments, the first feedback information may indicate that the first communication apparatus 210 successfully receives the signaling and whether to accept the first task, for example, may be ACK+accept, or may be ACK+reject.

In this way, the first response message is sent, so that the second communication apparatus 220 can timely learn whether the first communication apparatus 210 accepts the task. For example, when the first communication apparatus 210 rejects the task, the second communication apparatus 220 can assign another device to execute the task based on an actual requirement, thereby ensuring execution efficiency of the task and the like.

It may be understood that, if the first communication apparatus 210 rejects the first task, the process 300 may end herein. For example, the first response message indicates that the first communication apparatus 210 unsuccessfully receives the first task information, or the first response message indicates that the first communication apparatus 210 rejects the first task. In some examples, if the first communication apparatus 210 accepts the first task, the process 300 may continue to proceed to 340. For example, the first response message indicates that the first communication apparatus 210 accepts the first task.

The first communication apparatus 210 executes 340 the first task based on the first task information.

In a possible implementation, when determining that the first communication apparatus 210 is inside the geographical range indicated by the geographical range information, the first communication apparatus 210 executes the first task indicated by the first task identifier.

For example, it is assumed that the geographical range information indicates a specific cell. If the first communication apparatus 210 is located in the cell, the first communication apparatus 210 may execute the first task. In some other examples, if the first communication apparatus 210 determines that the first communication apparatus 210 is not inside the geographical range indicated by the geographical range information, the first communication apparatus 210 may not execute the first task. Optionally, the first communication apparatus 210 may delete the first task. Optionally, the first communication apparatus 210 may send a notification to the second communication apparatus 220. The notification may indicate at least one of the following: The first communication apparatus 210 is outside the geographical range indicated by the geographical range information, the first communication apparatus 210 stops the execution of the first task, or the first communication apparatus 210 has deleted the first task. In some other examples, if the first communication apparatus 210 enters a new cell because of movement or the like, optionally, the first communication apparatus 210 may receive task configuration information from a serving base station of the new cell. This is similar to that described in 310 above. Alternatively, optionally, the first communication apparatus 210 may determine, based on a SIB from the serving base station of the new cell, whether the task configuration information needs to be re-received. For example, the SIB (for example, a SIB 1) from the serving base station of the new cell may include indication information about the cell, for example, an area identifier (area ID) field in the SIB. If the area identifier is different from an area identifier of an original cell, the first communication apparatus 210 may continue to read the task configuration information (for example, from a SIB 20).

In a possible implementation, in a process in which the first communication apparatus 210 executes the first task, when a location of the first communication apparatus 210 is in an edge area of the geographical range in which the first task is executed, the first communication apparatus 210 sends a notification to the second communication apparatus 220, and the second communication apparatus 220 may update the first task information or perform other adjustment on the first task based on the notification.

In a possible implementation, when determining, based on location information of the first communication apparatus 210, that the second communication apparatus is located in the edge area of the geographical range in which the first task is executed, the second communication apparatus 220 updates the first task information or performs other adjustment on the first task.

The edge area of the geographical range may be determined using the geographical range information and a second threshold. For example, when the geographical range is a cell, the edge area of the geographical range is an area that is in the cell and that is distant from an edge of the cell by the second threshold.

According to the foregoing possible implementations, the task may be correspondingly adjusted before the location of the first communication apparatus is outside the geographical range in which the first task is executed, so that continuity of the execution of the task can be ensured.

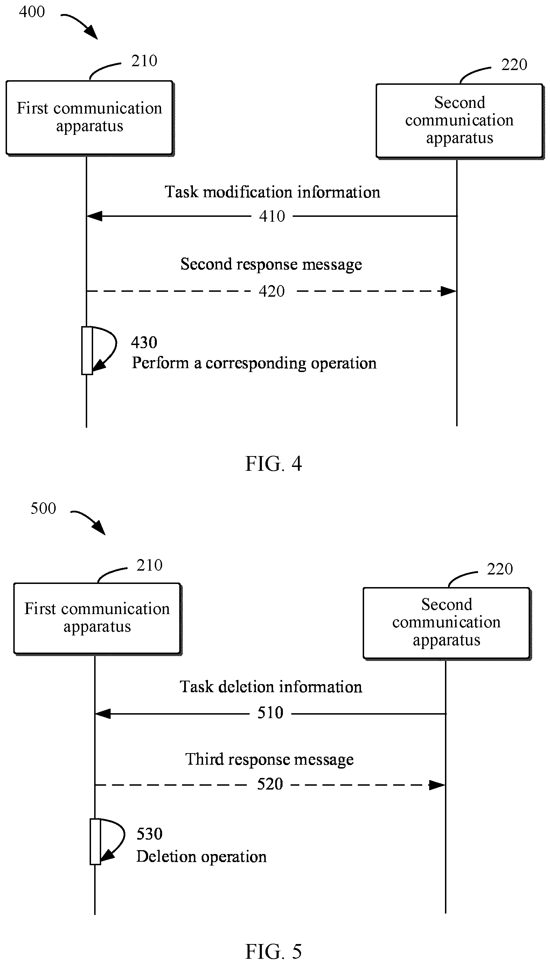

For example, it is assumed that the task configuration information further includes an indication about whether to perform execution in real time. If the indication is "real-time", the first communication apparatus 210 starts to execute the first task after receiving the first task information. If the indication is "non-real-time", the first communication apparatus 210 may further receive an execution indication (as shown below with reference to FIG. 4) from the second communication apparatus 220 to start to execute the first task. If the indication is "non-real-time" and the task configuration information further includes an indication about a trigger event, the first communication apparatus 210 may execute the first task when it is determined that the trigger event is met.

For example, it is assumed that the task configuration information further includes an indication about the execution duration. In this case, after receiving the task configuration information, the first communication apparatus 210 may start a timer, and stop the execution of the first task when the timer reaches the execution duration. Optionally, the first communication apparatus 210 may further delete the first task when the execution duration expires. Optionally, the first communication apparatus 210 may send, to the second communication apparatus 220, a notification that the first task has been deleted.

For example, it is assumed that the task configuration information further includes an indication about the quantity of execution times. In this case, the first communication apparatus 210 may count a quantity of times, and may stop the execution of the first task when the count reaches the quantity of execution times. Optionally, the first communication apparatus 210 may further delete the first task when the quantity of execution times is reached. Optionally, the first communication apparatus 210 may send, to the second communication apparatus 220, a notification that the first task has been deleted.

Optionally, as shown in FIG. 3, the first communication apparatus 210 may send 350 the recommendation information for the task to the second communication apparatus 220. For example, the recommendation information may include the first task identifier. For example, the recommendation information may indicate a recommendation about at least one of the following: a model parameter of an AI model; an execution requirement of the first task; geographical range information of the first task; time range information for executing the first task; granularity information for executing the first task; or the like. For example, in a process in which the first communication apparatus 210 executes the first task, if it is considered that some parameters configured by the second communication apparatus 220 are inappropriate, recommended values of the parameters may be determined, and then the recommended values of the parameters are sent to the second communication apparatus 220. For example, task information may indicate the recommended values of the parameters.

For example, after the first communication apparatus 210 receives the first task information from the second communication apparatus 220, if it is considered that a part or all of information indicated by the first task information is improper or inappropriate for the first communication apparatus 210, the first communication apparatus 210 may determine the recommendation information for the task based on a state of the first communication apparatus 210. Optionally, the state of the first communication apparatus 210 may indicate at least one of the following: a channel state of the first communication apparatus 210, a computing resource of the first communication apparatus 210, a storage capability of the first communication apparatus 210, and the like.

In an implementation, the second communication apparatus 220 may update the first task information based on the recommendation information, and may send updated first task information to the first communication apparatus 210.

In this manner, the first communication apparatus 210 may provide the recommendation information for the second communication apparatus 220, so that the second communication apparatus 220 can update a parameter timely, thereby avoiding a case in which the second communication apparatus 220 cannot obtain an actual state of the first communication apparatus 210 and consequently the parameter is improperly configured.

In an implementation, after receiving the recommendation information, the second communication apparatus 220 may reject the recommendation. For example, the second communication apparatus 220 sends rejection information for the recommendation information to the first communication apparatus 210. Therefore, the first communication apparatus 210 still executes the task based on the first task information.

Optionally, as shown in FIG. 3, the first communication apparatus 210 may send 360 task exception information to the second communication apparatus 220. For example, in a process in which the first communication apparatus 210 executes the first task, if an unrecoverable exception occurs, the first communication apparatus 210 may send the task exception information to the second communication apparatus 220, so that the second communication apparatus 220 can learn that the first task has been ended due to the exception. The task exception information may include the first task identifier. Optionally, the task exception information may further indicate a cause of the exception, for example, insufficient storage space, an insufficient computing capability, or a software exception. Optionally, the task exception information may further indicate completion progress information, for example, an intermediate computing result that has been obtained when the exception occurs, a percentage of a completed computing amount, or a percentage of an uncompleted computing amount. Optionally, after the exception occurs, the first communication apparatus 210 may delete the first task. Optionally, the first communication apparatus 210 may send, to the second communication apparatus 220, a notification that the first task has been deleted.

Optionally, as shown in FIG. 3, the first communication apparatus 210 may send 370 an execution result of the first task to the second communication apparatus 220. In some examples, in response to completion of the first task, the first communication apparatus 210 sends the execution result to the second communication apparatus 220. In some embodiments, after receiving a result query request from the second communication apparatus 220, the first communication apparatus 210 sends the execution result to the second communication apparatus 220. In some examples, in response to the completion of the first task, the first communication apparatus 210 sends, to the second communication apparatus 220, indication information (for example, 1 bit) indicating that the first task has been completed, so that the second communication apparatus 220 can know, as early as possible, that the task has been completed. Then, the second communication apparatus 220 may send the result query request to the first communication apparatus 210 based on the indication information that indicates that the first task has been completed and that is from the first communication apparatus 210. Therefore, the first communication apparatus 210 may send the execution result to the second communication apparatus 220 based on the result query request.

Optionally, in a process in which the first communication apparatus 210 executes the first task, the second communication apparatus 220 may further manage and control a life cycle of the first task, as described below with reference to embodiments in FIG. 4 to FIG. 6.

FIG. 4 is a schematic interaction flowchart of an information processing process 400 according to some embodiments of this application. A second communication apparatus 220 sends 410 task modification information to a first communication apparatus 210. The task modification information may include a first task identifier of a first task and an identifier indicating a to-be-modified parameter. Optionally, the indicated to-be-modified parameter may include a parameter (for example, an AI parameter) used in an execution process of the first task, or may include an execution state parameter of the first task. Execution states of the task may include: not started, started, paused, stopped, and the like.

It may be understood that the task modification information may be carried in communication signaling, for example, the foregoing SIB, RRC reconfiguration message, or RRC release message, or may be carried in other signaling. This is not limited in this application.

Optionally, the first communication apparatus 210 sends 420 a second response message for the task modification information to the second communication apparatus 220. In some embodiments, the second response message may indicate whether the first communication apparatus 210 successfully receives the task modification information, for example, may be an acknowledgment (ACK) or a negative acknowledgment (NACK). In some embodiments, the second response message may indicate whether the first communication apparatus 210 accepts the task modification information, for example, may be accept (accept) or reject (reject). In some embodiments, the second response message may indicate that the first communication apparatus 210 successfully receives the task modification information and whether to accept the task modification information, for example, may be ACK+accept, or may be ACK+rej ect.

The first communication apparatus 210 performs 430 a corresponding operation based on the task modification information. For example, if the first communication apparatus 210 accepts a modification instruction indicated by the task modification information, the first communication apparatus 210 may perform the corresponding operation based on the task modification information.

For example, the task indication information includes an indication about whether to perform execution in real time, and the indication is "non-real-time". In this case, the task modification information may include an indication of "start". Therefore, based on the indication, the first communication apparatus 210 may start to execute the first task, for example, change an execution state of the task from "not started" to "started".

For example, the task modification information may include an indication of any one of the following: "stopped", "paused", and the like. Therefore, the first communication apparatus 210 may correspondingly stop the first task or pause the first task based on the indication in the execution process of the task.

For example, the task modification information may include an indication of the to-be-modified parameter and a modified value. In this case, the first communication apparatus 210 may determine the to-be-modified parameter based on the indication, and modify the parameter to the "modified value".

It may be understood that the foregoing descriptions of the task modification information are merely an example. In an actual scenario, other modification information may alternatively be included, and is not listed herein one by one.

FIG. 5 is a schematic interaction flowchart of an information processing process 500 according to some embodiments of this application. A second communication apparatus 220 sends 510 task deletion information to a first communication apparatus 210. The task deletion information may include a first task identifier of a first task.

Optionally, the task deletion information may further include an indication about whether to retain task configuration information, where the task configuration information may be, for example, the task configuration information described with reference to FIG. 3.

It may be understood that the task deletion information may be carried in communication signaling, for example, the foregoing SIB, RRC reconfiguration message, or RRC release message, or may be carried in other signaling. This is not limited in this application.

Optionally, the first communication apparatus 210 sends 520 a third response message for the task deletion information to the second communication apparatus 220. In some embodiments, the third response message may indicate whether the first communication apparatus 210 successfully receives the task deletion information, for example, may be an acknowledgment (ACK) or a negative acknowledgment (NACK). In some embodiments, the third response message may indicate whether the first communication apparatus 210 accepts the task deletion information, for example, may be accept (accept) or reject (reject). In some embodiments, the third response message may indicate that the first communication apparatus 210 successfully receives the task deletion information and whether to accept the task deletion information, for example, may be ACK+accept, or may be ACK+reject.

The first communication apparatus 210 deletes 530 the first task based on the task deletion information. For example, if the first communication apparatus 210 accepts a deletion instruction indicated by the task deletion information, the first communication apparatus 210 may delete the first task based on the task deletion information. For example, the first communication apparatus 210 may delete an intermediate result, a final result, and/or the like in an execution process of the first task.

Optionally, the task deletion information may further include the indication about whether to retain the task configuration information. If the first communication apparatus 210 indicates not to retain the task configuration information associated with the first task, the first communication apparatus 210 may further delete the task configuration information. If the first communication apparatus 210 indicates to retain the task configuration information associated with the first task, the first communication apparatus 210 may further store (not delete) the task configuration information.

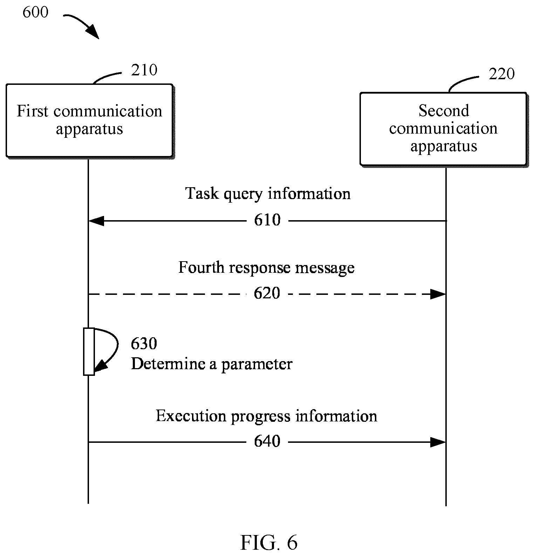

FIG. 6 is a schematic interaction flowchart of an information processing process 600 according to some embodiments of this application. A second communication apparatus 220 sends 610 task query information to a first communication apparatus 210. The task query information may include a first task identifier of a first task and an indication of a to-be-queried parameter.

For example, the to-be-queried parameter may include at least one of the following: completion progress information, processor capacity information, memory capacity information, electric power information, or an intermediate computing result. Optionally, the completion progress information may include one or more of the following: an indication of a completed progress, an indication of an uncompleted progress, time consumed by a completed task, estimated time consumed by an uncompleted task, or the like. The processor capacity information may include one or more of the following: a processor capacity occupation amount, a remaining processor capacity amount, and the like. The memory capacity information may include one or more of the following: a memory capacity occupation amount, a remaining memory capacity amount, and the like. The electric power information may include one or more of the following: consumed electric power, remaining electric power, and the like. For example, the indication of the completed progress may indicate a proportion of the completed progress, a quantity of layers that have completed computation, a quantity of nodes that have completed computation, and the like. Similarly, the indication of the uncompleted progress may indicate a proportion of the uncompleted progress, a quantity of layers that have not completed computation, a quantity of nodes that have not completed computation, and the like. For example, the intermediate computing result may indicate an intermediate result in a task execution process. For an AI inference task, the intermediate computing result may indicate an intermediate layer that has completed computation, an output value of the intermediate layer, and the like. For an AI training task, the intermediate computing result may indicate completed training times, an AI model parameter (for example, a connection weight between connection layers) obtained through current training and update, and the like. Optionally, the to-be-queried parameter may be referred to as an execution parameter or the like. This is not limited in this application.

It may be understood that the task query information may be carried in communication signaling, for example, the foregoing SIB, RRC reconfiguration message, or RRC release message, or may be carried in other signaling. This is not limited in this application.

Optionally, the first communication apparatus 210 sends 620 a fourth response message for the task query information to the second communication apparatus 220. In some embodiments, the fourth response message may indicate whether the first communication apparatus 210 successfully receives the task query information, for example, may be an acknowledgment (ACK) or a negative acknowledgment (NACK).

The first communication apparatus 210 determines 630 a value of the to-be-queried execution parameter based on the task query information. For example, the indication of the completed progress may indicate the proportion of the completed progress, for example, in a form of a percentage, or may indicate a completed computing amount. For example, the indication of the completed progress may directly or indirectly indicate a quantity of layers that have been computed, a quantity of nodes that have been computed, and the like of a neural network. For example, the indication of the uncompleted progress may indicate the proportion of the uncompleted progress, for example, in a form of a percentage, or may indicate an uncompleted computing amount, for example, a quantity of layers that have not been computed, a quantity of nodes that have not been computed, and the like of a neural network. For example, the time consumed by the completed task may indicate duration consumed for executing the completed progress, and the estimated time consumed by the uncompleted task may indicate consumed time required for completing remaining first task. For example, the processor capacity occupation amount may be represented as an occupied percentage of a processor, and the remaining processor capacity amount may be represented as an unoccupied percentage of the processor. For example, the processor may include one or more of the following: a CPU, a graphics processing unit (Graphics Processing Unit, GPU), a neural processing unit (Neutral Processing Unit, NPU), and the like. For example, the memory capacity occupation amount may be represented as an occupied percentage of a capacity of a memory, and the remaining memory capacity amount may be represented as an unoccupied percentage of the capacity of the memory. For example, the memory may include one or more of the following: a random access memory (Random Access Memory, RAM), a read-only memory (Read-Only Memory, ROM), and the like. For example, the consumed electric power may represent power consumed for executing the completed progress, and the remaining electric power may represent remaining electric power of a power supply of the first communication apparatus 210.

The first communication apparatus 210 sends 640 execution progress information for the task query information to the second communication apparatus 220. The execution progress information may indicate the first task identifier and a value of a determined execution parameter.

In this manner, the second communication apparatus 220 may send the task query information to the first communication apparatus 210 based on an actual requirement, to obtain an execution progress of the task.

Optionally, in some other implementations of this disclosure, the first communication apparatus 210 may send the execution progress information of the task to the second communication apparatus 220 when a preset condition is met. To be specific, even if the first communication apparatus 210 does not receive the task query information from the second communication apparatus 220, if determining that the preset condition is met, the first communication apparatus 210 may actively send the execution progress information to the second communication apparatus 220.

For example, the preset condition may include at least one of the following: Duration from time when the execution progress information is sent last time is greater than or equal to preset duration, a value of a first execution parameter is greater than or equal to a first preset value, and a value of a second execution parameter is less than or equal to a second preset value. The preset duration may be considered as a reporting cycle of the execution progress information of the task, which may be, for example, 10 ms or another value. The first execution parameter, for example, may include but is not limited to: the completed progress, the processor capacity occupation amount, processor capacity usage, the memory capacity occupation amount, memory capacity usage, the consumed electric power, and the like. The second execution parameter, for example, may include but is not limited to: the uncompleted progress, the remaining processor capacity amount, a remaining processor capacity rate, the remaining memory capacity amount, a remaining memory capacity rate, the remaining electric power, and the like. In an example, the preset condition may include that the completed progress reaches 20%. In another example, the preset condition may include that the remaining electric power is less than 20%. In still another example, the preset condition may include that the completed progress reaches 50% and the remaining electric power is less than 20%.

In this manner, the second communication apparatus 220 can learn of an execution state of the task timely, so that the second communication apparatus 220 performs subsequent processing based on the execution progress information. For example, the second communication apparatus 220 may determine whether to configure or schedule a new task to the first communication apparatus 210.

In this embodiment of this application, the foregoing various types of information sent by the second communication apparatus 220 to the first communication apparatus 210 may use a same format, and a specific meaning of the information may be indicated at a specific location (for example, a field) in the format. For example, the specific field at the specific location is 3 bits, 000 indicates that the information is task configuration information, 001 indicates that the information is task modification information, 010 indicates that the information is task deletion information, 011 indicates that the information is the task query information, and 100 indicates that the information is a result query request. However, it should be understood that this is merely an example. In an actual scenario, a part of the information may have a same format, and a part of the information may use a separate format of the information. This is not limited in this application.

In this embodiment of this application, the foregoing various types of information sent by the first communication apparatus 210 to the second communication apparatus 220 may use a same format, and a specific meaning of the information may be indicated at a specific location (for example, a field) in the format. For example, the specific field at the specific location is 2 bits, 00 indicates that the information is a response message (for example, any one of the first to the fourth response messages), 01 indicates that the information is a value of a queried parameter, 10 indicates that the information is recommendation information, and 11 indicates that the information is an execution result. However, it should be understood that this is merely an example. In an actual scenario, a part of the information may have a same format, and a part of the information may use a separate format of the information. This is not limited in this application.

According to the method shown in FIG. 6, the second communication apparatus 220 may learn of the execution progress information of the task, to adjust the task based on the information and improve efficiency of the task. For example, in a scenario in which the first communication apparatus 210 and the second communication apparatus 220 perform split learning, the second communication apparatus 220 may adjust a cutting point based on the execution progress information. Alternatively, when the first communication apparatus 210 executes a plurality of tasks, the second communication apparatus 220 may adjust priorities of the tasks based on the execution progress information; or the second communication apparatus 220 performs computing migration based on the execution progress information.

With reference to FIG. 3 to FIG. 6, the foregoing describes an embodiment of a process in which a single task executor (for example, the first communication apparatus 210) executes the first task based on a configuration from the second communication apparatus 220. In this manner, the second communication apparatus 220 may perform related configuration of the first task by using communication signaling, to ensure correct execution of the first task.

In some embodiments of this application, at least two task executors may collaborate to complete a task. For example, a task anchor may directly or indirectly perform task configuration for the at least two task executors, as described below with reference to embodiments in FIG. 7 to FIG. 11.

FIG. 7 is a schematic interaction flowchart of an information processing process 700 according to some embodiments of this application. The process 700 involves a first communication apparatus 210, a second communication apparatus 220, and a third communication apparatus 230. In the process 700, a task is collaboratively completed by at least two task executors. For example, in the following embodiments, two task executors are used as an example for descriptions. However, it should be understood that this application is not limited thereto. For example, there may be more task executors that collaboratively perform a task.

The second communication apparatus 220 determines 710 first task information about a first task to be executed. The first task information may include a first task identifier of the first task, and the first task includes an AI task and/or a sensing task.

Optionally, the first task information may include indication information (for example, 1 bit) about whether the first task is a single-node task. In an example, the task involved in the process 700 may be considered as a task that is collaborated by two nodes or a plurality of nodes. For brevity of illustration, the two task executors (the first communication apparatus 210 and the third communication apparatus 230) are used as an example. It may be understood that this solution is also applicable to a case in which there are more task executors. For example, the first task may be a non-uniform constellation diagram acknowledgment algorithm.

For example, the first task information may be referred to as task configuration information, which is, for example, included in a task configuration message. The first task information may include at least one of the following: the first task identifier of the first task; geographical range information of the first task; a function identifier of a communication function for which an output of the first task is to be used; a model parameter of an AI model used for the first task; an execution requirement of the first task; time range information for executing the first task; or granularity information for executing the first task. Optionally, the first task information may include a first node identifier and/or a first encapsulation protocol layer identifier, to indicate a path over which or a protocol layer at which the first communication apparatus 210 sends feedback to the second communication apparatus 220. For detailed descriptions of the first task information, refer to the foregoing embodiment with reference to FIG. 3. For brevity of illustration, details are not described herein again.

Optionally, in some examples, the first task information may further indicate an identification of the third communication apparatus 230. For example, the identification may be at least one of the following: an identifier of the third communication apparatus 230, a type of the third communication apparatus 230, address information of the third communication apparatus 230, and the like.

It should be noted that specific forms of various indications in the task configuration message are not limited in this embodiment of this application. For example, a specific field in control signaling may be used for an explicit or implicit indication. For example, a payload (payload) in data may be used for an indication.

The second communication apparatus 220 sends 720 the first task information to the first communication apparatus 210. For the process, refer to the foregoing descriptions with reference to 320 in FIG. 3. For brevity, details are not described herein again. Correspondingly, it may be understood that the first communication apparatus 210 receives the first task information from the second communication apparatus 220.

For example, the first communication apparatus 210 may send first feedback information to the second communication apparatus 220. The first feedback information includes the first task identifier of the first task, and the first feedback information may indicate at least one of the following: indication information indicating whether the first task information is successfully accepted by the first communication apparatus 210; indication information indicating whether execution of the task has been completed; execution result information of the task; execution progress information of the task; exception information indicating that execution of the task is abnormal; or recommendation information of the first communication apparatus 210 for the task.

For example, if the first task information includes the first node identifier, the first communication apparatus 210 may send, to the second communication apparatus 220, the first feedback information to a node corresponding to the first node identifier. For example, if the first task information includes the first encapsulation protocol layer identifier, the first communication apparatus 210 may encapsulate the first feedback information based on the first encapsulation protocol layer identifier, and send encapsulated first feedback information to the second communication apparatus 220.

With reference to specific embodiments, the following separately describes in detail different content indicated by the first feedback information.

Optionally, as shown in FIG. 7, the first communication apparatus 210 sends 722 a first response message for the signaling to the second communication apparatus 220. For the process, similarly refer to the foregoing descriptions with reference to 330 in FIG. 3. For brevity, details are not described herein again.

It may be understood that, if the first communication apparatus 210 rejects the first task, the process 700 may end herein. For example, the first response message indicates that the first communication apparatus 210 unsuccessfully receives the first task information, or the first response message indicates that the first communication apparatus 210 rejects the first task. In some examples, if the first communication apparatus 210 accepts the first task, the process 700 may continue to proceed to 730. For example, the first response message indicates that the first communication apparatus 210 accepts the first task.

The first communication apparatus 210 sends 730 second task information to the third communication apparatus 230. For example, the second task information may be the same as the first task information, or the second task information is a part of the first task information.

For example, the second task information may be sent in a form of signaling. A specific format of the signaling depends on device types of the first communication apparatus 210 and the third communication apparatus 230. For example, both the first communication apparatus 210 and the third communication apparatus 230 are terminal devices. In this case, optionally, the second task information may be transmitted on a physical sidelink control channel (Physical Sidelink Control Channel, PSCCH) or a physical sidelink shared channel (Physical Sidelink Shared Channel, PSSCH) between the first communication apparatus 210 and the third communication apparatus 230. Details are not described herein again.

In some examples, if the first task information indicates the identification of the third communication apparatus 230, the first communication apparatus 210 may determine the third communication apparatus 230 based on this. In some other examples, the first communication apparatus 210 may determine the third communication apparatus 230 by itself, for example, based on task load of the first task, a computing capability of the third communication apparatus 230, and the like described below.

Optionally, the second task information may indicate a second node identifier and/or a second encapsulation protocol layer identifier, to indicate a path over which or a protocol layer at which the third communication apparatus 230 sends feedback to the first communication apparatus 210.

For example, the third communication apparatus 230 may send second feedback information to the first communication apparatus 210. The second feedback information includes the first task identifier of the first task, and the second feedback information may indicate at least one of the following: indication information indicating whether the first task information is successfully accepted by the third communication apparatus 230; indication information indicating whether execution of the task has been completed; execution result information of the task; execution progress information of the task; exception information indicating that execution of the task is abnormal; or recommendation information of the third communication apparatus 230 for the task. For the second feedback information, similarly refer to the foregoing descriptions of the first feedback information.

For example, if the second task information includes the second node identifier, the third communication apparatus 230 may send the second feedback information to a node corresponding to the second node identifier. For example, if the second task information includes the second encapsulation protocol layer identifier, the first communication apparatus 210 may encapsulate the second feedback information based on the second encapsulation protocol layer identifier, and send encapsulated second feedback information.

With reference to specific embodiments, the following separately describes in detail different content indicated by the second feedback information.

Optionally, the third communication apparatus 230 may send 732 a second response message to the first communication apparatus 210. In some embodiments, the second response message may indicate whether the third communication apparatus 230 successfully receives the second task information, for example, may be an acknowledgment (ACK) or a negative acknowledgment (NACK). In some embodiments, the second response message may indicate whether the third communication apparatus 230 accepts the first task, for example, may be accept (accept) or reject (reject). In some embodiments, the first response message may indicate that the third communication apparatus 230 successfully receives the second task information, and indicate whether to accept the first task, for example, may be ACK+accept, or may be ACK+reject. It may be understood that the second response message is similar to the first response message in 722.

Optionally, the first communication apparatus 210 may send 734 the second response message to the second communication apparatus 220.

It may be understood that, if the third communication apparatus 230 rejects the first task, the second communication apparatus 220 may learn of information about rejection of the third communication apparatus 230 by using 732 and 734. In some examples, the first task is a real-time task, to be specific, after receiving the first task information, the first communication apparatus 210 starts to execute the first task. In this case, optionally, the second communication apparatus 220 may send task deletion information to the first communication apparatus 210, to indicate the first communication apparatus 210 to delete the first task.

It may be understood that a sequence shown in the accompanying drawing does not mean that the execution has to be performed based on the sequence. For example, 722 does not need to be performed before 730, and may alternatively be performed after 730 or simultaneously with 730. Alternatively, optionally, 722 and 734 may be performed simultaneously. Alternatively, optionally, after receiving the second response message from the third communication apparatus 230, the first communication apparatus 210 may send the first response message and the second response message to the second communication apparatus 220 in a same piece of signaling.

It should be noted that the foregoing descriptions with reference to 722 to 734 are merely an example. In some other possible implementations, after receiving the first task information, the first communication apparatus 210 may determine the second task information and send the second task information to the third communication apparatus 230. For example, if the first communication apparatus 210 cannot execute the first task indicated by the first task information due to a limitation of the first communication apparatus 210, the third communication apparatus 230 may be configured to execute the task. Optionally, the third communication apparatus 230 may send the second response message to the first communication apparatus 210, where the second response message may indicate the third communication apparatus 230 to accept or reject the first task. Optionally, the first communication apparatus 210 may forward the second response message to the second communication apparatus 220. In this manner, the second communication apparatus 220 may know whether the first task is successfully accepted, and does not need to specifically know which communication apparatus (the first communication apparatus 210 and/or the third communication apparatus 230) executes the first task.

It may be understood that, if the first communication apparatus 210 accepts the first task, and the third communication apparatus 230 also accepts the first task, the process 700 may continue to proceed to 742 and 744.

The first communication apparatus 210 executes 742 the first task based on the first task information, and the third communication apparatus 230 executes 744 the first task based on the second task information.

In the process 700, a specific embodiment in which the first communication apparatus 210 executes the first task is similar to 340 in the process 300, and a specific embodiment in which the third communication apparatus 230 executes the first task is also similar to 340 in the process 300. For brevity, details are not described herein again.

Optionally, as shown in FIG. 7, the first communication apparatus 210 may send 752 first recommendation information to the second communication apparatus 220. For example, the first recommendation information may include the first task identifier. For example, the first recommendation information may indicate a recommendation about at least one of the following: a model parameter of an AI model; an execution requirement of the first task; geographical range information of the first task; time range information for executing the first task; granularity information for executing the first task; or the like.

Optionally, as shown in FIG. 7, the third communication apparatus 230 may send 754 second recommendation information to the first communication apparatus 210. Optionally, the first communication apparatus 210 may further send 756 the second recommendation information to the second communication apparatus 220. For example, the second recommendation information may include the first task identifier. For example, the second recommendation information may indicate a recommendation about at least one of the following: a model parameter of an AI model; an execution requirement of the first task; geographical range information of the first task; time range information for executing the first task; granularity information for executing the first task; or the like.

Optionally, as shown in FIG. 7, the first communication apparatus 210 may send 762 first task exception information to the second communication apparatus 220. Optionally, the first communication apparatus 210 may further send 764 the first task exception information to the third communication apparatus 230. For example, in a process in which the first communication apparatus 210 executes the first task, if an unrecoverable exception occurs, the first communication apparatus 210 may send the first task exception information to the second communication apparatus 220, so that the second communication apparatus 220 can learn that the first task has been ended due to the exception. The first task exception information may include the first task identifier. Optionally, the first task exception information may further indicate a cause of the exception, for example, insufficient storage space, an insufficient computing capability, or a software exception. Optionally, the first task exception information may further indicate a state of an executed part, for example, a percentage of a completed computing amount or a percentage of an uncompleted computing amount. Optionally, the first communication apparatus 210 may delete the first task. Optionally, the third communication apparatus 230 may stop the execution of the first task, or the third communication apparatus 230 may delete the first task.

Optionally, as shown in FIG. 7, the third communication apparatus 230 may send 766 second task exception information to the first communication apparatus 210. Optionally, the first communication apparatus 210 may send 768 the second task exception information to the second communication apparatus 220. For example, in a process of executing the first task, if an unrecoverable exception occurs, the third communication apparatus 230 may send the second task exception information to the first communication apparatus 210. The second task exception information may include the first task identifier. Optionally, the second task exception information may further indicate a cause of the exception, for example, insufficient storage space, an insufficient computing capability, or a software exception. Optionally, the second task exception information may further indicate completion progress information, for example, a percentage of a completed computing amount or a percentage of an uncompleted computing amount. Optionally, the second task exception information may further indicate an intermediate computing result, and may indicate a computing result that has been obtained when the exception occurs. Optionally, the third communication apparatus 230 may delete the first task. Optionally, the first communication apparatus 210 may stop the execution of the first task, or the first communication apparatus 210 may delete the first task.

Optionally, as shown in FIG. 7, the first communication apparatus 210 may send 772 a first execution result of the first task to the second communication apparatus 220. In some examples, in response to completion of the first task, the first communication apparatus 210 sends the first execution result to the second communication apparatus 220. In some embodiments, after receiving a result query request from the second communication apparatus 220, the first communication apparatus 210 sends the first execution result to the second communication apparatus 220. In some examples, in response to the completion of the first task, the first communication apparatus 210 sends, to the second communication apparatus 220, indication information (for example, 1 bit) indicating that the first task has been completed, so that the second communication apparatus 220 can know, as early as possible, that the task has been completed. Then, the second communication apparatus 220 may send the result query request to the first communication apparatus 210 based on the indication information that indicates that the first task has been completed and that is from the first communication apparatus 210. Therefore, the first communication apparatus 210 may send the first execution result to the second communication apparatus 220 based on the result query request.

Optionally, as shown in FIG. 7, the third communication apparatus 230 sends 774 a second execution result of the first task to the first communication apparatus 210. Optionally, the first communication apparatus 210 may further send 776 the second execution result to the second communication apparatus 220. In some examples, in response to completion of the first task, the third communication apparatus 230 sends the second execution result to the first communication apparatus 210. In some embodiments, after receiving a result query request from the first communication apparatus 210, the third communication apparatus 230 sends the second execution result to the first communication apparatus 210. In some examples, in response to the completion of the first task, the third communication apparatus 230 sends, to the first communication apparatus 210, indication information (for example, 1 bit) indicating that the first task has been completed, so that the first communication apparatus 210 can know, as early as possible, that the task has been completed. Then, the first communication apparatus 210 may send the result query request to the third communication apparatus 230 based on the indication information that indicates that the first task has been completed and that is from the third communication apparatus 230. Therefore, the third communication apparatus 230 may send the second execution result to the first communication apparatus 210 based on the result query request.

In some other embodiments, optionally, the first communication apparatus 210 may receive the second execution result from the third communication apparatus 230, and then the first communication apparatus 210 may send the first execution result and the second execution result together to the second communication apparatus 220.

With reference to the process 700 in FIG. 7, the second communication apparatus 220 has a task management and control function. The first communication apparatus 210 has both a task execution function and a task management and control function. In other words, the first communication apparatus 210 has both an attribute of a task anchor and an attribute of a task executor. The third communication apparatus 230 has a task execution function.

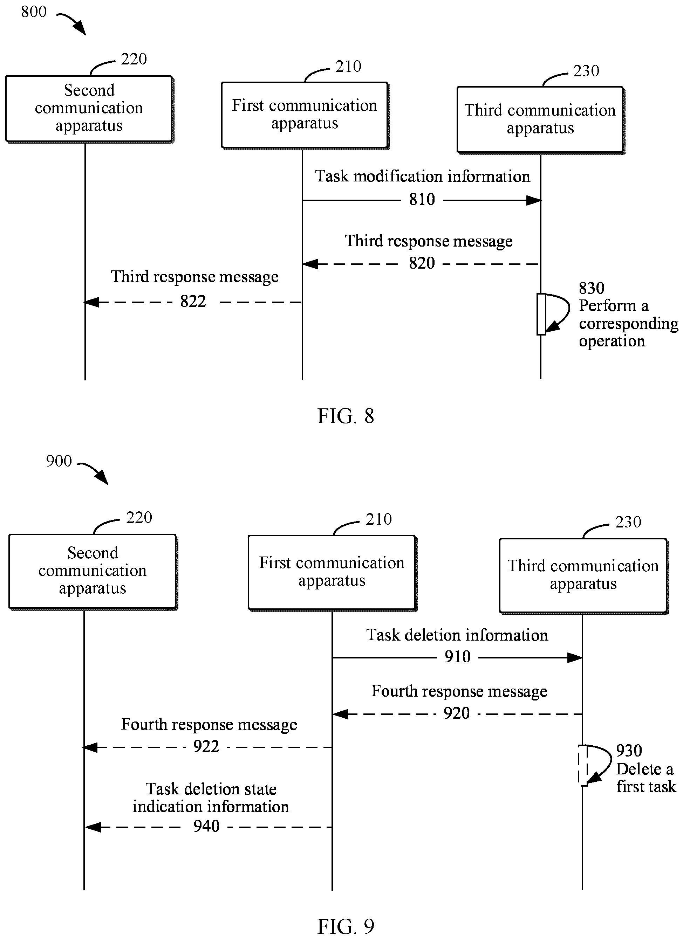

Optionally, in a process in which the first communication apparatus 210 executes the first task and the third communication apparatus 230 executes the first task, the second communication apparatus 220 may further manage and control a life cycle of the first task. Optionally, the first communication apparatus 210 may also manage and control a life cycle for the third communication apparatus 230. In some embodiments, for a solution in which the second communication apparatus 220 manages and controls the life cycle of the first task executed by the first communication apparatus 210, refer to the foregoing descriptions with reference to FIG. 4 to FIG. 6. For brevity, details are not described herein again. With reference to FIG. 8 to FIG. 10, the following describes embodiments of life cycle management and control during the execution of the first task by the third communication apparatus 230.

FIG. 8 is a schematic interaction flowchart of an information processing process 800 according to some embodiments of this application. A first communication apparatus 210 sends 810 task modification information to a third communication apparatus 230. For example, the first communication apparatus 210 may use, based on task modification information (for example, 410 in FIG. 4) from a second communication apparatus 220, a part of the task modification information for the third communication apparatus 230 as the task modification information to be sent in 810. For another example, the first communication apparatus 210 may determine, based on a local task execution state of the first communication apparatus 210, to send the task modification information to the third communication apparatus 230.

Optionally, the third communication apparatus 230 sends 820 a third response message for the task modification information to the first communication apparatus 210. Optionally, the first communication apparatus 210 may send 822 the third response message to the second communication apparatus 220. It may be understood that, for the third response message, similarly refer to the second response message in FIG. 4. For brevity, details are not described herein again.

The third communication apparatus 230 performs 830 a corresponding operation based on the task modification information. For example, if accepting a modification instruction indicated by the task modification information, the third device 230 may perform the corresponding operation based on the task modification information.

It may be understood that, for specific descriptions of the task modification information, refer to related descriptions in 410 in FIG. 4. Details are not described herein again. The foregoing descriptions of the task modification information are merely an example. In an actual scenario, other modification information may alternatively be included, and details are not listed herein.

FIG. 9 is a schematic interaction flowchart of an information processing process 900 according to some embodiments of this application. A first communication apparatus 210 sends 910 task deletion information to a third communication apparatus 230. The task deletion information may include a first task identifier of a first task. For example, the first communication apparatus 210 may use, based on task deletion information (for example, 510 in FIG. 5) from a second communication apparatus 220, a part of the task deletion information for the third communication apparatus 230 as the task deletion information to be sent in 910. For another example, the first communication apparatus 210 may determine, based on a local task execution state of the first communication apparatus 210, to send the task deletion information to the third communication apparatus 230.

For example, if an unrecoverable exception occurs in a process in which the first communication apparatus 210 executes the first task, because the first task is a collaboration task and a resource waste is caused when only the third communication apparatus 230 continues to execute the first task, the first communication apparatus 210 may indicate the third communication apparatus 230 to stop execution and delete the first task.

Optionally, the task deletion information may further include an indication about whether to retain task configuration information, where the task configuration information may be, for example, the task configuration information described with reference to FIG. 7.

Optionally, the third communication apparatus 230 sends 920 a fourth response message for the task deletion information to the first communication apparatus 210. Optionally, the first communication apparatus 210 may send 922 the fourth response message to the second communication apparatus 220. It may be understood that, for the fourth response message, similarly refer to the third response message in FIG. 5. For brevity, details are not described herein again.

The third communication apparatus 230 deletes 930 the first task based on the task deletion information. For example, if the third communication apparatus 230 accepts a deletion instruction indicated by the task deletion information, the third communication apparatus 230 may delete the first task based on the task deletion information. For example, the first communication apparatus 210 may delete an intermediate result, a final result, and/or the like in an execution process of the first task.

Optionally, the first communication apparatus 210 sends 940 task deletion state indication information to the second communication apparatus 220. For example, the task deletion state indication information may indicate both the first communication apparatus 210 and the third communication apparatus 230 to delete the local first tasks. For example, the task deletion state indication information may indicate the first communication apparatus 210 to delete the local first task, and the third communication apparatus 230 to refuse to delete the first task.

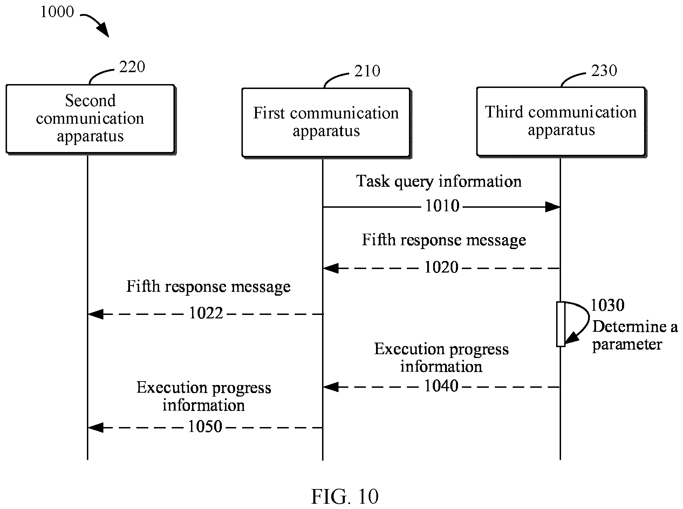

FIG. 10 is a schematic interaction flowchart of an information processing process 1000 according to some embodiments of this application. A first communication apparatus 210 sends 1010 task query information to a third communication apparatus 230. For example, the first communication apparatus 210 may use, based on task query information (for example, 610 in FIG. 6) from a second communication apparatus 220, a part of the task query information for the third communication apparatus 230 as the task query information to be sent in 1010. For another example, the first communication apparatus 210 may determine, based on a local task execution state of the first communication apparatus 210, to send the task query information to the third communication apparatus 230.

Optionally, the third communication apparatus 230 sends 1020 a fifth response message for the task query information to the first communication apparatus 210. Optionally, the first communication apparatus 210 may send 1022 the fifth response message to the second communication apparatus 220. It may be understood that, for the fifth response message, similarly refer to the fourth response message in FIG. 6. For brevity, details are not described herein again.

The third communication apparatus 230 determines 1030 a value of a to-be-queried parameter based on the task query information.

The third communication apparatus 230 may send 1040 execution progress information for the task query information to the first communication apparatus 210. The execution progress information may indicate a first task identifier and a value of a determined parameter.

Optionally, the first communication apparatus 210 may send 1050 the execution progress information to the second communication apparatus 220. In some embodiments, the first communication apparatus 210 may send, to the second communication apparatus 220, execution progress information of the first task in the first communication apparatus 210 together with execution progress information of the first task in the third communication apparatus 230.

It may be understood that a process in which the first communication apparatus 210 manages and controls the task for the third communication apparatus 230 in FIG. 8 to FIG. 10 is similar to the foregoing process in which the second communication apparatus 220 manages and controls the task for the first communication apparatus 210 in FIG. 4 to FIG. 6. For brevity, details are not described in embodiments in FIG. 8 to FIG. 10.

It may be understood that, in the process 700 to the process 1000, the third communication apparatus 230 may directly or indirectly send second feedback information to the first communication apparatus 210. For example, if second task information indicates a second node identifier, the third communication apparatus 230 may send the second feedback information to a node corresponding to the second node identifier. If the second task information indicates a second encapsulation protocol layer identifier, the third communication apparatus 230 may encapsulate the second feedback information, and send encapsulated second feedback information.

In some embodiments, the third communication apparatus 230 may send the second feedback information to another intermediate device based on the second node identifier and/or the second encapsulation protocol layer identifier, and the intermediate device forwards the second feedback information to the first communication apparatus 210. The second node identifier may indicate, for example, any one of the following: a CU, a CU-CP, a CU-UP, a DU, a base station, a core network, and the like. The second encapsulation protocol layer identifier may indicate, for example, any one of the following: a physical layer, a MAC layer, an RRC layer, and an SDAP layer.

For example, the first communication apparatus 210 is a terminal device, and an example in which the third communication apparatus 230 needs to send a second execution result to the first communication apparatus 210 is used. In some examples, it is assumed that the second node identifier indicates the CU-CP. In this case, the third communication apparatus 230 may send the second execution result to the CU-CP. Optionally, the second execution result may include an identification of the first communication apparatus 210, so that the CU-CP can know a next destination node of the second execution result based on the identification of the first communication apparatus 210, and then the CU-CP can forward the received second execution result to the first communication apparatus 210. Optionally, a correspondence between a task and a path may be preconfigured. For example, the first task identifier of the first task may be in one-to-one mapping with a reporting path. Therefore, the CU-CP may forward the second execution result to the first communication apparatus 210 based on the correspondence and the first task identifier. In some examples, it is assumed that the second encapsulation protocol layer identifier indicates the MAC layer. In this case, the third communication apparatus 230 may perform MAC encapsulation on the second execution result, and then send, to a DU corresponding to the MAC layer, a second execution result obtained through the MAC encapsulation. Optionally, the second execution result may include the identification of the first communication apparatus 210, so that the DU can know a next destination node of the second execution result based on the identification of the first communication apparatus 210, and then the DU can forward the received second execution result to the first communication apparatus 210. Optionally, a correspondence between a task and a path may be preconfigured. For example, the first task identifier of the first task may be in one-to-one mapping with a reporting path. Therefore, the DU may forward the second execution result to the first communication apparatus 210 based on the correspondence and the first task identifier.

It may be understood that forwarding in this embodiment of this application may be transparent forwarding. For example, a transparent forwarding manner is used, and received information or a received message is not parsed, and is completely sent to a next node (for example, the first communication apparatus 210). Alternatively, the forwarding in this embodiment of this application may be non-transparent forwarding. For example, the received information or the received message may be first parsed, and then is sent to the next node (for example, the first communication apparatus 210) after being re-packaged.

In this embodiment of this application, the foregoing various types of information sent by the first communication apparatus 210 to the third communication apparatus 230 may use a same format, and a specific meaning of the information may be indicated at a specific location (for example, a field) in the format. For example, the specific field at the specific location is 3 bits, 000 indicates that the information is task configuration information, 001 indicates that the information is task modification information, 010 indicates that the information is task deletion information, 011 indicates that the information is the task query information, and 100 indicates that the information is a result query request. However, it should be understood that this is merely an example. In an actual scenario, a part of the information may have a same format, and a part of the information may use a separate format of the information. This is not limited in this application.

In this embodiment of this application, the foregoing various types of information sent by the third communication apparatus 230 to the first communication apparatus 210 may use a same format, and a specific meaning of the information may be indicated at a specific location (for example, a field) in the format. For example, the specific field at the specific location is 2 bits, 00 indicates that the information is a response message, 01 indicates that the information is a value of a queried parameter, 10 indicates that the information is recommendation information, and 11 indicates that the information is an execution result. However, it should be understood that this is merely an example. In an actual scenario, a part of the information may have a same format, and a part of the information may use a separate format of the information. This is not limited in this application.

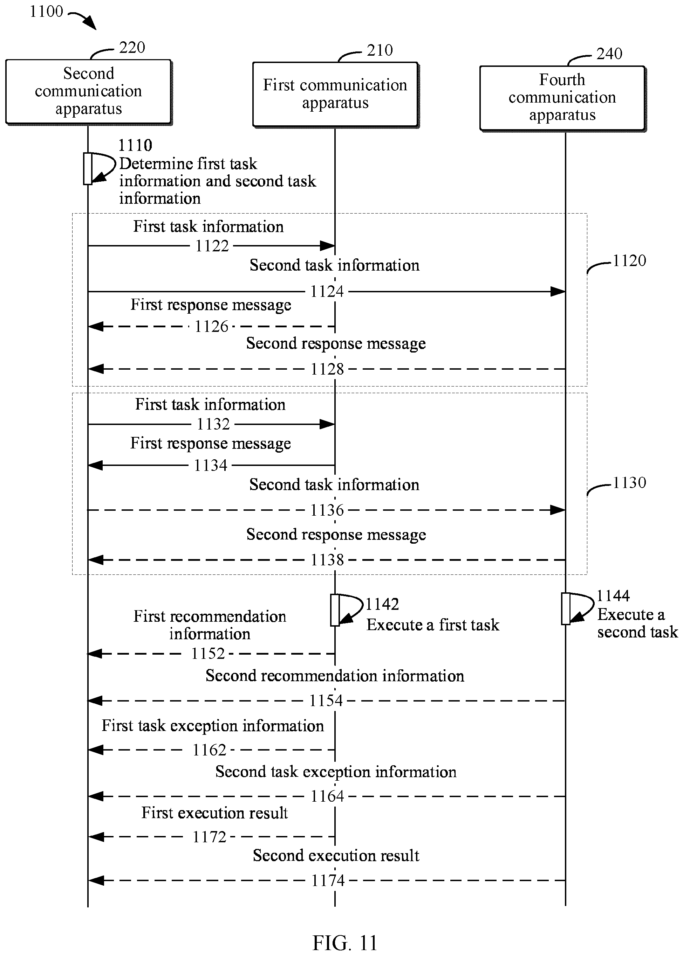

FIG. 11 is a schematic interaction flowchart of an information processing process 1100 according to some embodiments of this application. The process 1100 involves a first communication apparatus 210, a second communication apparatus 220, and a fourth communication apparatus 240. In the process 1100, a task is collaboratively completed by at least two task executors. For example, in the following embodiments, two task executors are used as an example for descriptions. However, it should be understood that this application is not limited thereto. For example, there may be more task executors that collaboratively perform a task.

The second communication apparatus 220 determines 1110 first task information about a first task to be executed and second task information about a second task to be executed. In an example, the second communication apparatus 220 may divide, based on a task to be executed, the task into the first task and the second task. The task to be executed may be a task, for example, a non-uniform constellation diagram confirmation algorithm that requires collaboration of at least two task executors.

The first task information may include a first task identifier of the first task, and the first task includes an AI task and/or a sensing task. The second task information may include a second task identifier of the second task, and the second task includes an AI task and/or a sensing task. In an example, the first task identifier and the second task identifier may be the same, so that the task collaboratively executed by the first communication apparatus 210 and the fourth communication apparatus 240 may be associated using the task identifiers. However, it should be understood that this application is not limited thereto. For example, the first task identifier and the second task identifier may be different. Optionally, association with the task may be performed using a part of the first task identifier and a part of the second task identifier, or the association with the task may be performed using a correspondence between the first task identifier and the second task identifier.

Optionally, the first task information may include indication information (for example, 1 bit) about whether the first task is a single-node task. The second task information may include indication information (for example, 1 bit) about whether the second task is a single-node task. In an example, the task in the process 1100 may be considered as a task that is collaborated by two nodes or a plurality of nodes. For brevity of illustration, the two task executors (the first communication apparatus 210 and the fourth communication apparatus 240) are used as an example.

For example, the first task information may be referred to as first task configuration information, for example, included in a first task configuration message. The first task information may include at least one of the following: the first task identifier of the first task; geographical range information of the first task; a function identifier of a communication function for which an output of the first task is to be used; a model parameter of an AI model used for the first task; an execution requirement of the first task; time range information for executing the first task; or granularity information for executing the first task. Optionally, the first task information may include a first node identifier and/or a first encapsulation protocol layer identifier, to indicate a path over which or a protocol layer at which the first communication apparatus 210 sends feedback to the second communication apparatus 220. For detailed descriptions of the first task information, refer to the foregoing embodiment with reference to FIG. 3. For brevity of illustration, details are not described herein again.

For example, the second task information may be referred to as second task configuration information, for example, included in a second task configuration message. The second task information may include at least one of the following: the second task identifier of the second task; geographical range information of the second task; a function identifier of a communication function for which an output of the second task is to be used; a model parameter of an AI model used for the second task; an execution requirement of the second task; time range information for executing the second task; or granularity information for executing the second task. Optionally, the second task information may include a second node identifier and/or a second encapsulation protocol layer identifier, to indicate a path over which or a protocol layer at which the fourth communication apparatus 240 sends feedback to the second communication apparatus 220 or the first communication apparatus 210. Detailed descriptions about the second task information are similar to the foregoing descriptions about the first task information. Therefore, reference may be made to the foregoing specific descriptions about the first task information.

It should be noted that specific forms of various indications in the task configuration message are not limited in this embodiment of this application. For example, a specific field in control signaling may be used for an explicit or implicit indication. For example, a payload (payload) in data may be used for an indication.

An embodiment in which the second communication apparatus 220 sends the first task information to the first communication apparatus 210 and sends the second task information to the fourth communication apparatus 240 may be shown in 1120 or 1130 in FIG. 11. Correspondingly, it may be understood that the first communication apparatus 210 may send first feedback information to the second communication apparatus 220, and the fourth communication apparatus 240 may send third feedback information to the second communication apparatus 220. For the first feedback information/third feedback information, first feedback information sent based on the first node identifier and/or the first encapsulation protocol layer identifier, second feedback information sent based on the second node identifier and/or the second encapsulation protocol layer identifier, and the like, refer to related descriptions of the first feedback information in the foregoing embodiment with reference to FIG. 3. Similarly, different content indicated by the first feedback information/second feedback information is also separately described in FIG. 11.

Some embodiments of the process 1100 are shown in a dashed box 1120. The second communication apparatus 220 sends 1122 the first task information to the first communication apparatus 210. The second communication apparatus 220 sends 1124 the second task information to the fourth communication apparatus 240.

For example, the first task information may be sent using first signaling, and the second task information may be sent using second signaling. In this example, the first signaling and the second signaling are sent independently of each other. In other words, the second signaling does not depend on the first signaling, and the first signaling does not depend on the second signaling either. For example, the second communication apparatus 220 may simultaneously send the first signaling and the second signaling.

For example, a specific form of the first signaling may depend on a device type of the second communication apparatus 220 and a device type of the first communication apparatus 210, and a specific form of the second signaling may depend on the device type of the second communication apparatus 220 and a device type of the fourth communication apparatus 240. It is assumed that the second communication apparatus 220 is an access network device, the first communication apparatus 210 is a terminal device, and the fourth communication apparatus 240 is a terminal device. In this case, optionally, the first signaling or the second signaling may be at least one of the following: physical layer signaling, MAC layer signaling, RRC layer signaling, and the like.

Optionally, as shown in FIG. 11, the first communication apparatus 210 sends 1126 a first response message for the first signaling to the second communication apparatus 220. Optionally, the fourth communication apparatus 240 sends 1128 a second response message for the second signaling to the second communication apparatus 220. The first response message and the second response message that are in FIG. 11 may be similar to the first response message in 330 in FIG. 3. For brevity, details are not described herein again.

In some optional embodiments, it is assumed that at least one of the first response message and the second response message indicates that task information is rejected. For brevity of illustration, it is assumed that the first task information is rejected by the first communication apparatus 210 and the second task information is accepted by the fourth communication apparatus 240. In an example, the task is a real-time task. To be specific, the fourth communication apparatus 240 has started to execute the task in real time. In this case, the second communication apparatus 220 may further send task deletion information to the fourth communication apparatus 240, to indicate the fourth communication apparatus 240 to delete the corresponding task. In this manner, in this embodiment of this application, configuration rollback can be implemented when a configuration is unsuccessful. This avoids problems such as a resource waste and energy consumption that are caused by task execution of a task executor that is successfully configured. In another example, the second communication apparatus 220 may re-determine another communication apparatus that can replace the first communication apparatus 210, and send the first task information to the another communication apparatus, so that the another communication apparatus executes the task.

Some other embodiments of the process 1100 are shown in a dashed box 1130. The second communication apparatus 220 sends 1132 the first task information to the first communication apparatus 210, for example, may send the first task information by using the first signaling. The first communication apparatus 210 sends 1134 the first response message to the second communication apparatus 220.

In some embodiments, the first response message may indicate whether the first communication apparatus 210 successfully receives the signaling, for example, may be an acknowledgment (ACK) or a negative acknowledgment (NACK). In some embodiments, the first response message may indicate whether the first communication apparatus 210 accepts the first task, for example, may be accept (accept) or reject (reject). In some embodiments, the first response message may indicate that the first communication apparatus 210 successfully receives the signaling, and indicate whether to accept the first task, for example, may be ACK+accept, or may be ACK+reject.

If the first response message indicates that the first communication apparatus 210 rejects the first task information, the second communication apparatus 220 may end a configuration process of the task. In this way, signaling overheads can be reduced.

If the first response message indicates that the first communication apparatus 210 accepts the first task information, the second communication apparatus 220 may send 1136 the second task information to the fourth communication apparatus 240, for example, may send the second task information by using the second signaling. In this way, sending of the second task information depends on successful acceptance of the first task information.

Optionally, the fourth communication apparatus 240 sends 1138 the second response message for the second signaling to the second communication apparatus 220. The second response message may indicate whether the fourth communication apparatus 240 successfully receives the signaling, for example, may be an acknowledgment (ACK) or a negative acknowledgment (NACK). In some embodiments, the second response message may indicate whether the fourth communication apparatus 240 accepts the first task, for example, may be accept (accept) or reject (reject). In some embodiments, the second response message may indicate that the fourth communication apparatus 240 successfully receives the signaling, and indicate whether to accept the first task, for example, may be ACK+accept, or may be ACK+reject.

In some optional embodiments, if the second response message indicates that the second task information is rejected by the fourth communication apparatus 240, the second communication apparatus 220 may alternatively send the task deletion information to the first communication apparatus 210 and/or the fourth communication apparatus 240, to indicate the first communication apparatus 210 and/or the fourth communication apparatus 240 to delete the corresponding task. In this manner, in this embodiment of this application, configuration rollback can be implemented when a configuration is unsuccessful. This avoids problems such as a resource waste and energy consumption that are caused by task execution of a task executor that is successfully configured. Alternatively, optionally, the second communication apparatus 220 may re-determine another communication apparatus, to execute the task.

Regardless of the process shown in the dashed box 1120 or the dashed box 1130, when the first communication apparatus 210 accepts the first task and the fourth communication apparatus 240 accepts the second task, the process 1100 may continue to proceed to 1142 and 1144.

The first communication apparatus 210 executes 1142 the first task based on the first task information, and the fourth communication apparatus 240 executes 1144 the second task based on the second task information.

In the process 1100, a specific embodiment in which the first communication apparatus 210 executes the first task is similar to 340 in the process 300, and a specific embodiment in which the fourth communication apparatus 240 executes the first task is also similar to 340 in the process 300. For brevity, details are not described herein again.

Optionally, the first communication apparatus 210 may send 1152 first recommendation information to the second communication apparatus 220. Optionally, the fourth communication apparatus 240 may send 1154 second recommendation information to the second communication apparatus 220.

Optionally, the first communication apparatus 210 may send 1162 first task exception information to the second communication apparatus 220. Optionally, the fourth communication apparatus 240 may send 1164 second task exception information to the second communication apparatus 220.

Optionally, the first communication apparatus 210 may send 1172 a first execution result of the first task to the second communication apparatus 220. Optionally, the fourth communication apparatus 240 sends 1174 a second execution result of the second task to the second communication apparatus 220.

For the first recommendation information/second recommendation information, similarly refer to the recommendation information in 350 in FIG. 3. For the first task exception information/second task exception information, similarly refer to the task exception information in 360 in FIG. 3. For the first execution result/second execution result, similarly refer to the execution result in 370 in FIG. 3. Details are not described herein again.

Optionally, in a process in which the first communication apparatus 210 executes the first task and the fourth communication apparatus 240 executes the second task, the second communication apparatus 220 may further manage and control a life cycle of the first task and a life cycle of the second task. In some embodiments, for a solution in which the second communication apparatus 220 manages and controls the life cycle of the first task executed by the first communication apparatus 210, refer to the foregoing descriptions with reference to FIG. 4 to FIG. 6. For brevity, details are not described herein again. In some embodiments, for a solution in which the second communication apparatus 220 manages and controls the life cycle of the second task executed by the fourth communication apparatus 240, similarly refer to the foregoing descriptions with reference to FIG. 4 to FIG. 6. For brevity, details are not described herein again.

With reference to FIG. 7 to FIG. 11, embodiments of processes in which two task executors (for example, the first communication apparatus 210 and the third communication apparatus 230, or the first communication apparatus 210 and the fourth communication apparatus 240) execute tasks based on the configuration from the second communication apparatus 220 are described above. However, it should be noted that, this is also applicable to a case in which there are more than two task executors, which also falls within the scope of the protection of this application.

It should be understood that, in embodiments of this application, terms "first", "second", "third", and the like are merely intended to indicate that a plurality of objects may be different, but two objects may be the same. The terms "first", "second", "third", and the like should not be construed as any limitation on embodiments of this application.

It should be further understood that division into the manners, cases, categories, and embodiments in embodiments of this application is merely for ease of descriptions, and should not constitute a particular limitation. Features in the manners, categories, cases, and embodiments may be combined with each other provided that the features are logical.

It should be further understood that the foregoing content is merely intended to help a person skilled in the art better understand embodiments of this application, instead of limiting the scope of embodiments of this application. A person skilled in the art may make various modifications, variations, combinations, or the like based on the foregoing content. A solution obtained through such a modification, variation, or combination also falls within the scope of embodiments of this application.

It should be further understood that descriptions of the foregoing content focus on differences between embodiments. For same or similar parts, refer to each other. For brevity, details are not described herein again.

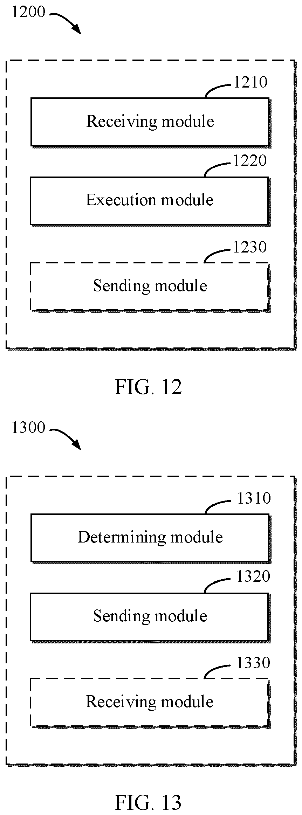

FIG. 12 is a block diagram of a communication apparatus 1200 according to some embodiments of this application. The communication apparatus 1200 may be implemented as the first communication apparatus 210 shown in FIG. 2, or may be implemented as a part of the first communication apparatus 210.

The communication apparatus 1200 may be implemented as a terminal device, an apparatus in a terminal device, or an apparatus that can be used together with a terminal device. The communication apparatus 1200 may be implemented as a network device, an apparatus in a network device, or an apparatus that can be used together with a network device. The network device may be an access network device or a core network device. The communication apparatus 1200 may include corresponding modules or units configured to perform various methods/operations/steps/actions performed by the first communication apparatus 210 in the foregoing method embodiments. The module or unit may be implemented as a hardware circuit, or may be software, or may be a combination of a hardware circuit and software.

The communication apparatus 1200 includes a receiving module 1210 and an execution module 1220. Optionally, the communication apparatus 1200 may further include a sending module 1230.

The receiving module 1210 is configured to receive first task information about a task to be executed from a second communication apparatus, where the first task information includes a task identifier of the task, and the task includes an AI task and/or a sensing task. The execution module 1220 is configured to execute the task based on the first task information.

In some embodiments of this application, the first task information may indicate at least one of the following: geographical range information of the task; a function identifier of a communication function for which an output of the task is to be used; a model parameter of an AI model used for the task; an execution requirement of the task; time range information for executing the task; granularity information for executing the task; a node identifier; or an encapsulation protocol layer identifier.

For example, the execution requirement includes a latency parameter requirement and/or a reliability requirement. For example, the time range information includes at least one of the following: a quantity of execution times, execution duration, or trigger condition information.

The sending module 1230 is configured to send first feedback information to the second communication apparatus, where the first feedback information includes the task identifier. For example, the first feedback information includes at least one of the following: indication information indicating whether the first task information is successfully accepted; indication information indicating whether execution of the task has been completed; execution result information of the task; execution progress information of the task; exception information indicating that execution of the task is abnormal; or recommendation information for the task.

In some embodiments, the first feedback information includes execution progress information of the task, and the receiving module 1210 is further configured to receive state query information from the second communication apparatus, where the state query information includes the task identifier. For example, the execution progress information indicates at least one of the following: completion progress information, processor capacity information, memory capacity information, electric power information, or an intermediate computing result.

Optionally, the first task information further includes the node identifier, and the sending module 1230 may be configured to send, based on the node identifier, the first feedback information to a node corresponding to the node identifier.

Optionally, the first task information further includes the encapsulation protocol layer identifier. The sending module 1230 may be configured to encapsulate the first feedback information based on the encapsulation protocol layer identifier, and send encapsulated first feedback information to the second communication apparatus.

Specifically, the execution module 1220 is further configured to: if it is determined that a first communication apparatus is outside an execution range indicated by the geographical range information, stop processing of the task or delete the task. Optionally, the sending module 1230 may be configured to send a notification message to the second communication apparatus, where the notification message indicates at least one of the following: The first communication apparatus is already outside the execution range, the first communication apparatus has stopped the processing of the task, or the first communication apparatus has deleted the task.

Optionally, the first task information further includes a device identification of a third communication apparatus, and the sending module 1230 may be configured to send the first task information to the third communication apparatus, to cause the task to be executed by the third communication apparatus.

In some embodiments, the receiving module 1210 is further configured to receive second feedback information from the third communication apparatus. The sending module 1230 is configured to send the second feedback information to the second communication apparatus. For example, the second feedback information includes at least one of the following: indication information indicating whether the first task information is successfully accepted by the third communication apparatus; indication information indicating whether execution of the task has been completed; execution result information of the task; execution progress information of the task; exception information indicating that execution of the task is abnormal; or recommendation information of the third communication apparatus for the task.

The receiving module 1210 may be configured to receive configuration information from the second communication apparatus. The configuration information includes the task identifier, a model identifier of a corresponding AI model, a first identifier of an input parameter of the AI model, or a second identifier of an output parameter of the AI model. Optionally, the model parameter includes at least one of the following: the model identifier, the first identifier, or the second identifier. Optionally, the model parameter includes at least one of the following: a model identifier of the AI model, an input parameter of the AI model, and an output parameter of the AI model.

In some embodiments, the receiving module 1210 may be further configured to receive task modification information from the second communication apparatus. The task modification information includes a first task identifier, and the task modification information further indicates an identifier of a to-be-modified parameter. The parameter may include a parameter (for example, an AI parameter) used in an execution process of the first task, or may include an execution state parameter of the first task or the like. Execution states of the task may include: not started, started, paused, stopped, and the like.

In some embodiments, the receiving module 1210 may be further configured to receive task deletion information from the second communication apparatus. The task deletion information includes the first task identifier, and the task deletion information further includes an indication about whether to retain the task configuration information. In addition, optionally, the execution module 1220 is further configured to delete the task based on the task deletion information. Optionally, the execution module 1220 is further configured to delete the task configuration information based on the task deletion information.

In some embodiments of this application, the communication apparatus is any one of the following: a core network device, an access network device, or a terminal device. The second communication apparatus is any one of the following: a core network device, an access network device, or a terminal device. The third communication apparatus is any one of the following: a core network device, an access network device, or a terminal device.

Division into the modules or the units in this embodiment of this application is an example, is merely logical function division, and may be other division during actual implementation. In addition, functional units in the disclosed embodiment may be integrated into one unit, each of the units may exist alone physically, or two or more units may be integrated into one unit. The integrated unit may be implemented in a form of hardware, or may be implemented in a form of a software functional unit.

The apparatus 1200 in FIG. 12 can be configured to implement, with reference to FIG. 3 to FIG. 11, the processes performed by the first communication apparatus 210. For brevity, details are not described herein again.

FIG. 13 is a block diagram of a communication apparatus 1300 according to some embodiments of this application. The communication apparatus 1300 may be implemented as the second communication apparatus 220 shown in FIG. 2, or may be implemented as a part of the second communication apparatus 220.

The communication apparatus 1300 includes a determining module 1310 and a sending module 1320. Optionally, the communication apparatus 1300 may further include a receiving module 1330.

The determining module 1310 is configured to determine first task information about a first task to be executed, where the first task information includes a first task identifier of the first task, and the first task includes an AI task and/or a sensing task. The sending module 1320 is configured to send signaling to a first communication apparatus, where the signaling includes the first task information.

In some embodiments of this application, the first task information may indicate at least one of the following: geographical range information of the task; a function identifier of a communication function for which an output of the task is to be used; a model parameter of an AI model used for the task; an execution requirement of the task; time range information for executing the task; granularity information for executing the task; a node identifier; or an encapsulation protocol layer identifier.

For example, the execution requirement includes a latency parameter requirement and/or a reliability requirement. For example, the time range information includes at least one of the following: a quantity of execution times, execution duration, or trigger condition information.

The receiving module 1330 is configured to receive first feedback information from the first communication apparatus, where the first feedback information includes the first task identifier. For example, the first feedback information includes at least one of the following: indication information indicating whether the first task information is successfully accepted by the first communication apparatus; indication information indicating whether execution of the first task has been completed; execution result information of the first task; execution progress information of the first task; exception information indicating that execution of the first task is abnormal; or recommendation information of the first communication apparatus for the first task.

In some embodiments, the first feedback information includes the execution progress information of the first task, and the sending module 1320 is further configured to send state query information to the first communication apparatus, where the state query information includes the first task identifier. For example, the execution progress information indicates at least one of the following: completion progress information, processor capacity information, memory capacity information, electric power information, or an intermediate computing result.

Optionally, the receiving module 1330 is configured to receive a notification message from the first communication apparatus, where the notification message indicates at least one of the following: The first communication apparatus is already outside an execution range indicated by the geographical range information, the first communication apparatus has stopped processing the first task, or the first communication apparatus has deleted the first task.

Optionally, the first task information may further include an identification of a third communication apparatus, to indicate the first communication apparatus to send the first task information to the third communication apparatus.

In some embodiments, the determining module 1310 may be further configured to determine second task information about a second task to be executed, where the second task information includes a second task identifier of the second task, geographical range information of the second task, and the function identifier, and the second task includes at least one of the following: an artificial intelligence AI task or a sensing task. The sending module 1320 is further configured to send signaling to a fourth communication apparatus, where the signaling includes the second task information.

The receiving module 1330 is configured to receive the first feedback information from the first communication apparatus, where the first feedback information indicates that the first task information is successfully received. The receiving module 1330 is further configured to receive third feedback information from the fourth communication apparatus, where the third feedback information indicates that the second task information is unsuccessfully received. Further, the sending module 1320 is further configured to send first deletion indication information to the first communication apparatus, to indicate the first communication apparatus to delete the first task information. The sending module 1320 is further configured to send second deletion indication information to the fourth communication apparatus, to indicate the fourth communication apparatus to delete the second task information.

For example, the sending module 1320 may be further configured to send configuration information to the first communication apparatus. The configuration information includes a task identifier, a model identifier of a corresponding AI model, a first identifier of an input parameter of the AI model, or a second identifier of an output parameter of the AI model. Optionally, the model parameter includes at least one of the following: the model identifier, the first identifier, or the second identifier. Optionally, the model parameter includes at least one of the following: a model identifier of the AI model, an input parameter of the AI model, an output parameter of the AI model, a quantity of network layers of the AI model, or a convolution parameter of the AI model.

In some embodiments, the sending module 1320 is further configured to send task modification information to the first communication apparatus, where the task modification information includes the first task identifier, and the task modification information further indicates an identifier of a to-be-modified parameter. The parameter may include a parameter (for example, an AI parameter) used in an execution process of the first task, or may include an execution state parameter of the first task or the like. Execution states of the task may include: not started, started, paused, stopped, and the like.

In some embodiments, the sending module 1320 is further configured to send task deletion information to the first communication apparatus, where the task deletion information includes the first task identifier, and the task deletion information further includes an indication about whether to retain the task configuration information.

In some embodiments of this application, the first communication apparatus is any one of the following: a core network device, an access network device, or a terminal device. The communication apparatus is any one of the following: a core network device, an access network device, or a terminal device. The third communication apparatus is any one of the following: a core network device, an access network device, or a terminal device. The fourth communication apparatus is any one of the following: a core network device, an access network device, or a terminal device.

Division into the modules or the units in this embodiment of this application is an example, is merely logical function division, and may be other division during actual implementation. In addition, functional units in the disclosed embodiment may be integrated into one unit, each of the units may exist alone physically, or two or more units may be integrated into one unit. The integrated unit may be implemented in a form of hardware, or may be implemented in a form of a software functional unit.

The apparatus 1300 in FIG. 13 can be configured to implement, with reference to FIG. 3 to FIG. 11, the processes performed by the second communication apparatus 220. For brevity, details are not described herein again.

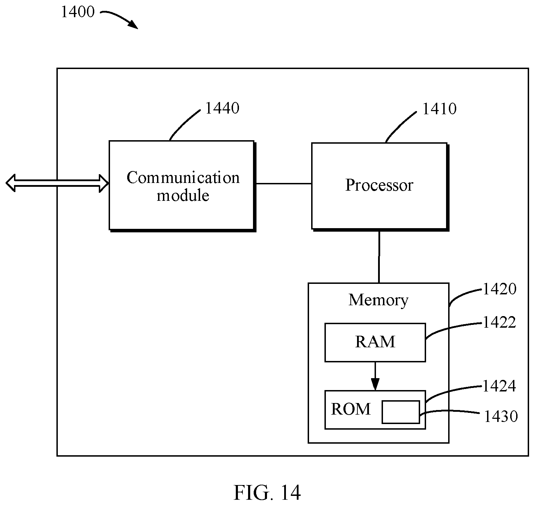

FIG. 14 is a block diagram of an example device 1400 that may be configured to implement an embodiment of this application. The device 1400 may be implemented as or included in the first communication apparatus 210 in FIG. 2, or may be implemented as or included in the second communication apparatus 220 in FIG. 2. As shown in the figure, the device 1400 includes one or more processors 1410, one or more memories 1420 coupled to the processors 1410, and a communication module 1440 coupled to the processors 1410.

The communication module 1440 may be configured to receive and send data and/or signaling. The communication module 1440 may have at least one communication interface for communication. The communication interface may include any interface required for communicating with another device. For example, the communication interface may be a transceiver, a circuit, a bus, or another type of communication interface.

The processor 1410 may be any type applicable to a local technology network, and may include but is not limited to at least one of the following: one or more of a general-purpose computer, a dedicated computer, a microcontroller, a digital signal processor (Digital Signal Processor, DSP), a control-based computer, or a controller-based multi-core controller architecture. The device 1400 may have a plurality of processors, such as application-specific integrated circuit chips, which in time belong to a clock synchronized with a main processor.

The memory 1420 may include one or more non-volatile memories and one or more volatile memories. An example of the non-volatile memory includes but is not limited to at least one of the following: a read-only memory (Read-Only Memory, ROM) 1424, an erasable programmable read-only memory (Erasable Programmable Read-Only Memory, EPROM), a flash memory, a hard disk, a compact disc (Compact Disc, CD), a digital versatile disc (Digital Versatile Disc, DVD), or other magnetic storage and/or optical storage. An example of the volatile memory includes but is not limited to at least one of the following: a RAM 1422, or another volatile memory that does not persist during power-off duration.

A computer program 1430 includes computer-executable instructions executed by an associated processor 1410. The program 1430 may be stored in the ROM 1424. The processor 1410 may perform any proper action and processing by loading the program 1430 into the RAM 1422.

This embodiment of this application may be implemented using the program 1430, so that the device 1400 can perform any process discussed with reference to FIG. 3 to FIG. 11. This embodiment of this application may alternatively be implemented using hardware or a combination of software and hardware.

The program 1430 may be tangibly included in a computer-readable medium, and the computer-readable medium may be included in the device 1400 (for example, in the memory 1420) or another storage device that is accessible by the device 1400. The program 1430 may be loaded from the computer-readable medium into the RAM 1422 for execution. The computer-readable medium may include any type of tangible non-volatile memory, for example, a ROM, an EPROM, a flash memory, a hard disk, a CD, or a DVD.

In some embodiments, the communication module 1440 in the device 1400 may be implemented as a transmitter and a receiver (or a transceiver), and may be configured to send/receive task information and the like. In addition, the device 1400 may further include one or more of the following: a scheduler, a controller, and alan radio frequency/antenna. Details are not described in this application.

For example, the device 1400 in FIG. 14 may be implemented as an electronic device, or may be implemented as a chip or a chip system in an electronic device. This is not limited in this embodiment of this application.

An embodiment of this application further provides a chip. The chip may include an input interface, an output interface, and a processing circuit. In this embodiment of this application, the input interface and the output interface may complete signaling or data interaction, and the processing circuit may complete generation and processing of the signaling or data information. The processing circuit may be a logic circuit.

An embodiment of this application further provides a chip system, including a processor, configured to support a computing device in implementing the function in any one of the foregoing embodiments. In a possible design, the chip system may further include a memory, configured to store necessary program instructions and data. When the processor runs the program instructions, a device in which the chip system is installed is caused to implement the method in any one of the foregoing embodiments. For example, the chip system may include one or more chips, or may include a chip and another discrete device.

An embodiment of this application further provides a processor, configured to be coupled to a memory. The memory stores instructions. When the processor runs the instructions, the processor is caused to perform the method and function in any one of the foregoing embodiments.

An embodiment of this application further provides a computer program product including instructions. When the computer program product runs on a computer, the computer is caused to perform the method and function in any one of the foregoing embodiments.

An embodiment of this application further provides a computer-readable storage medium. The computer-readable storage medium stores computer instructions. When a processor runs the instructions, the processor is caused to perform the method and function in any one of the foregoing embodiments.

Usually, various embodiments of this application may be implemented by hardware or a dedicated circuit, software, logic, or any combination thereof. Some aspects may be implemented by hardware, and other aspects may be implemented by firmware or software, and may be performed by a controller, a microprocessor, or another computing device. Although aspects of embodiments of this application are shown and described as block diagrams or flowcharts, or represented by some other illustrations, it should be understood that the blocks, apparatuses, systems, technologies, or methods described in this specification may be implemented as, for example, non-limiting examples, hardware, software, firmware, dedicated circuits or logic, general-purpose hardware, controllers, other computing devices, or a combination thereof.

This application further provides at least one computer program product tangibly stored on a non-transitory computer-readable storage medium. The computer program product includes computer-executable instructions, such as instructions included in a program module, which are executed in a device on a real or virtual target processor, to perform the process/method as described above with reference to the accompanying drawings. Usually, the program module includes a routine, a program, a library, an object, a class, a component, a data structure, or the like that executes a specific task or implements a specific abstract data type. In various embodiments, functions of program modules may be combined or split between the program modules as required. Machine-executable instructions for the program module may be executed locally or in a distributed device. In the distributed device, the program module may be located in a local and remote storage medium.

Computer program code for implementing the method in this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, executed partially on a computer, executed as a standalone software package, executed partially on a computer and partially on a remote computer, or executed entirely on a remote computer or a server.

In the context of this application, the computer program code or related data may be carried in any proper carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any proper combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or a flash memory), an optical storage device, a magnetic storage device, or any proper combination thereof.

In addition, although the operations of the methods in this application are described in a particular order in the accompanying drawings, this does not require or imply that these operations need to be performed in the particular order or that all of the shown operations need to be performed to achieve a desired result. Instead, execution orders of the steps depicted in the flowcharts may change. Additionally or alternatively, some steps may be omitted, a plurality of steps may be combined into one step for execution, and/or one step may be broken down into a plurality of steps for execution. It should further be noted that features and functions of two or more apparatuses according to this application may be specific in one apparatus. Instead, features and functions of one apparatus described above may be further specific in a plurality of apparatuses.

The foregoing has described the implementations of this application. The foregoing descriptions are examples, are not exhaustive, and are not limited to the disclosed implementations. Without departing from the scope of the described implementations, many modifications and variations are apparent to a person of ordinary skill in the art. Selection of the terms used in this specification is intended to well explain principles of the implementations, actual applications, or improvements to technologies in the market, or to enable another person of ordinary skill in the art to understand the implementations disclosed in this specification.

## Claims

1. An information processing method, comprising:
receiving, by a first communication apparatus, first task information that is about a task to be executed and that is from a second communication apparatus, wherein the first task information comprises a task identifier of the task and geographical range information of the task, and the task comprises at least one of the following: an artificial intelligence AI task or a sensing task; and
causing, by the first communication apparatus based on the first task information, the task to be executed.

2. The method according to claim 1, further comprising:
sending, by the first communication apparatus, first feedback information to the second communication apparatus, wherein the first feedback information comprises the task identifier.

3. The method according to claim 2, wherein the first feedback information comprises at least one of the following:
indication information indicating whether the first task information is successfully accepted by the first communication apparatus;
indication information indicating whether execution of the task has been completed;
execution result information of the task;
execution progress information of the task;
exception information indicating that execution of the task is abnormal; or
recommendation information of the first communication apparatus for the task.

4. The method according to claim 2, wherein the first feedback information comprises execution progress information of the task, and the method further comprises:
receiving, by the first communication apparatus, state query information from the second communication apparatus, wherein the state query information comprises the task identifier.

5. The method according to claim 3 or 4, wherein the execution progress information indicates at least one of the following: completion progress information, processor capacity information, memory capacity information, electric power information, or an intermediate computing result.

6. The method according to any one of claims 2 to 5, wherein the first task information further comprises at least one of the following: a node identifier or an encapsulation protocol layer identifier.

7. The method according to any one of claims 1 to 6, further comprising:
when the first communication apparatus is outside an execution range indicated by the geographical range information, stopping, by the first communication apparatus, processing of the task or deleting the task.

8. The method according to claim 7, further comprising:
sending, by the first communication apparatus, a notification message to the second communication apparatus, wherein the notification message indicates at least one of the following: the first communication apparatus is already outside the execution range, the first communication apparatus has stopped the processing of the task, or the first communication apparatus has deleted the task.

9. The method according to any one of claims 1 to 8, wherein the first task information further comprises a device identification of a third communication apparatus, and the causing, by the first communication apparatus based on the first task information, the task to be executed comprises:
sending, by the first communication apparatus, the first task information to the third communication apparatus, to cause the task to be executed by the third communication apparatus.

10. The method according to claim 9, further comprising:
receiving, by the first communication apparatus, second feedback information from the third communication apparatus; and
sending, by the first communication apparatus, the second feedback information to the second communication apparatus.

11. The method according to claim 10, wherein the second feedback information comprises at least one of the following:
indication information indicating whether the first task information is successfully accepted by the third communication apparatus;
indication information indicating whether execution of the task has been completed;
execution result information of the task;
execution progress information of the task;
exception information indicating that execution of the task is abnormal; or
recommendation information of the third communication apparatus for the task.

12. The method according to any one of claims 1 to 11, wherein the first task information further comprises at least one of the following:
a function identifier of a communication function for which an output of the task is to be used;
a model parameter of an AI model used for the task;
an execution requirement of the task, wherein the execution requirement comprises at least one of the following: a latency requirement or a reliability requirement;
time range information for executing the task, wherein the time range information comprises at least one of the following: a quantity of execution times, execution duration, or trigger condition information; or
granularity information for executing the task.

13. The method according to claim 12, wherein the model parameter comprises at least one of the following:
a model identifier of the AI model corresponding to the task identifier, a first identifier of an input parameter of the AI model, or a second identifier of an output parameter of the AI model.

14. The method according to claim 12, wherein the model parameter comprises at least one of the following: a model identifier of the AI model, an input parameter of the AI model, an output parameter of the AI model, a quantity of network layers of the AI model, or a convolution parameter of the AI model.

15. An information processing method, comprising:
determining, by a second communication apparatus, first task information about a first task to be executed, wherein the first task information comprises a first task identifier of the first task and geographical range information of the first task, and the first task comprises at least one of the following: an artificial intelligence AI task or a sensing task; and
sending, by the second communication apparatus, the first task information to a first communication apparatus.

16. The method according to claim 15, further comprising:
receiving, by the second communication apparatus, first feedback information from the first communication apparatus, wherein the first feedback information comprises the first task identifier.

17. The method according to claim 16, wherein the first feedback information comprises at least one of the following:
indication information indicating whether the first task information is successfully accepted by the first communication apparatus;
indication information indicating whether execution of the first task has been completed;
execution result information of the first task;
execution progress information of the first task;
exception information indicating that execution of the first task is abnormal; or
recommendation information of the first communication apparatus for the first task.

18. The method according to claim 17, wherein the first feedback information comprises the execution progress information of the first task, and the method further comprises:
sending, by the second communication apparatus, state query information to the first communication apparatus, wherein the state query information comprises the first task identifier.

19. The method according to claim 17 or 18, wherein the execution progress information indicates at least one of the following: completion progress information, processor capacity information, memory capacity information, electric power information, or an intermediate computing result.

20. The method according to any one of claims 15 to 19, wherein the first task information further comprises at least one of the following: a node identifier or an encapsulation protocol layer identifier.

21. The method according to any one of claims 15 to 20, further comprising:
receiving, by the second communication apparatus, a notification message from the first communication apparatus, wherein the notification message indicates at least one of the following: the first communication apparatus is already outside an execution range indicated by the geographical range information, the first communication apparatus has stopped processing of the first task, or the first communication apparatus has deleted the first task.

22. The method according to any one of claims 15 to 21, wherein the first task information further comprises an identification of a third communication apparatus.

23. The method according to any one of claims 15 to 22, wherein the first task information further comprises a function identifier of a communication function for completing the first task.

24. The method according to claim 23, further comprising:
determining, by the second communication apparatus, second task information about a second task to be executed, wherein the second task information comprises a second task identifier of the second task, geographical range information of the second task, and the function identifier, and the second task comprises at least one of the following: an artificial intelligence AI task or a sensing task; and
sending, by the second communication apparatus, the second task information to a fourth communication apparatus.

25. The method according to claim 24, further comprising:
receiving, by the second communication apparatus, the first feedback information from the first communication apparatus, wherein the first feedback information indicates that the first task information is successfully accepted; and
receiving, by the second communication apparatus, third feedback information from the fourth communication apparatus, wherein the third feedback information indicates that the second task information is unsuccessfully accepted.

26. The method according to claim 25, further comprising:
sending, by the second communication apparatus, first deletion indication information to the first communication apparatus, to indicate the first communication apparatus to delete the first task information.

27. The method according to any one of claims 15 to 26, wherein the first task information further comprises at least one of the following:
a function identifier of a communication function for which an output of the task is to be used;
a model parameter of an AI model used for the first task;
an execution requirement of the first task, wherein the execution requirement comprises at least one of the following: a latency parameter requirement or a reliability requirement;
time range information for executing the first task, wherein the time range information comprises at least one of the following: a quantity of execution times, execution duration, or trigger condition information; or
granularity information for executing the first task.

28. The method according to claim 27, wherein the model parameter comprises at least one of the following:
a model identifier of the AI model corresponding to the first task identifier, a first identifier of an input parameter of the AI model, or a second identifier of an output parameter of the AI model.

29. The method according to claim 27, wherein the model parameter comprises at least one of the following: a model identifier of the AI model, an input parameter of the AI model, an output parameter of the AI model, a quantity of network layers of the AI model, or a convolution parameter of the AI model.

30. An information processing method, comprising:
receiving, by a first communication apparatus, first task information that is about a task to be executed and that is from a second communication apparatus, wherein the first task information comprises a task identifier of the task, the first task information further comprises a first node identifier and/or a first encapsulation protocol layer identifier, and the task comprises at least one of the following: an artificial intelligence AI task or a sensing task; and
causing, by the first communication apparatus based on the first task information, the task to be executed.

31. The method according to claim 30, further comprising:
sending, by the first communication apparatus, first feedback information to the second communication apparatus, wherein the first feedback information comprises the task identifier.

32. The method according to claim 31, wherein the first feedback information comprises at least one of the following:
indication information indicating whether the first task information is successfully accepted by the first communication apparatus;
indication information indicating whether execution of the task has been completed;
execution result information of the task;
execution progress information of the task;
exception information indicating that execution of the task is abnormal; or
recommendation information of the first communication apparatus for the task.

33. The method according to claim 31, wherein the first feedback information comprises execution progress information of the task, and the method further comprises:
receiving, by the first communication apparatus, state query information from the second communication apparatus, wherein the state query information comprises the task identifier.

34. The method according to claim 32 or 33, wherein the execution progress information indicates at least one of the following: completion progress information, processor capacity information, memory capacity information, electric power information, or an intermediate computing result.

35. The method according to any one of claims 31 to 34, wherein the first task information further comprises geographical range information of the task.

36. The method according to claim 35, further comprising:
when the first communication apparatus is outside an execution range indicated by the geographical range information, stopping, by the first communication apparatus, processing of the task or deleting the task.

37. The method according to claim 36, further comprising:
sending, by the first communication apparatus, a notification message to the second communication apparatus, wherein the notification message indicates at least one of the following: the first communication apparatus is already outside the execution range, the first communication apparatus has stopped the processing of the task, or the first communication apparatus has deleted the task.

38. The method according to any one of claims 30 to 37, wherein the first task information further comprises a device identification of a third communication apparatus, and the causing, by the first communication apparatus based on the first task information, the task to be executed comprises:
sending, by the first communication apparatus, the first task information to the third communication apparatus, to cause the task to be executed by the third communication apparatus.

39. The method according to claim 38, further comprising:
receiving, by the first communication apparatus, second feedback information from the third communication apparatus; and
sending, by the first communication apparatus, the second feedback information to the second communication apparatus.

40. The method according to claim 39, wherein the second feedback information comprises at least one of the following:
indication information indicating whether the first task information is successfully accepted by the third communication apparatus;
indication information indicating whether execution of the task has been completed;
execution result information of the task;
execution progress information of the task;
exception information indicating that execution of the task is abnormal; or
recommendation information of the third communication apparatus for the task.

41. The method according to any one of claims 30 to 40, wherein the first task information further comprises at least one of the following:
a function identifier of a communication function for which an output of the task is to be used;
a model parameter of an AI model used for the task;
an execution requirement of the task, wherein the execution requirement comprises at least one of the following: a latency requirement or a reliability requirement;
time range information for executing the task, wherein the time range information comprises at least one of the following: a quantity of execution times, execution duration, or trigger condition information; or
granularity information for executing the task.

42. The method according to claim 41, wherein the model parameter comprises at least one of the following:
a model identifier of the AI model corresponding to the task identifier, a first identifier of an input parameter of the AI model, or a second identifier of an output parameter of the AI model.

43. The method according to claim 41, wherein the model parameter comprises at least one of the following: a model identifier of the AI model, an input parameter of the AI model, an output parameter of the AI model, a quantity of network layers of the AI model, or a convolution parameter of the AI model.

44. An information processing method, comprising:
determining, by a second communication apparatus, first task information about a first task to be executed, wherein the first task information comprises a first task identifier of the first task and a first node identifier and/or a first encapsulation protocol layer identifier, and the first task comprises at least one of the following: an artificial intelligence AI task or a sensing task; and
sending, by the second communication apparatus, the first task information to a first communication apparatus.

45. The method according to claim 44, further comprising:
receiving, by the second communication apparatus, first feedback information from the first communication apparatus, wherein the first feedback information comprises the first task identifier.

46. The method according to claim 45, wherein the first feedback information comprises at least one of the following:
indication information indicating whether the first task information is successfully accepted by the first communication apparatus;
indication information indicating whether execution of the first task has been completed;
execution result information of the first task;
execution progress information of the first task;
exception information indicating that execution of the first task is abnormal; or
recommendation information of the first communication apparatus for the first task.

47. The method according to claim 46, wherein the first feedback information comprises the execution progress information of the first task, and the method further comprises:
sending, by the second communication apparatus, state query information to the first communication apparatus, wherein the state query information comprises the first task identifier.

48. The method according to claim 46 or 47, wherein the execution progress information indicates at least one of the following: completion progress information, processor capacity information, memory capacity information, electric power information, or an intermediate computing result.

49. The method according to any one of claims 44 to 48, wherein the first task information further comprises geographical range information of the first task.

50. The method according to claim 49, further comprising:
receiving, by the second communication apparatus, a notification message from the first communication apparatus, wherein the notification message indicates at least one of the following: the first communication apparatus is already outside an execution range indicated by the geographical range information, the first communication apparatus has stopped processing of the first task, or the first communication apparatus has deleted the first task.

51. The method according to any one of claims 44 to 50, wherein the first task information further comprises an identification of a third communication apparatus.

52. The method according to any one of claims 44 to 51, wherein the first task information further comprises a function identifier of a communication function for completing the first task.

53. The method according to claim 52, further comprising:
determining, by the second communication apparatus, second task information about a second task to be executed, wherein the second task information comprises a second task identifier of the second task, geographical range information of the second task, and the function identifier, and the second task comprises at least one of the following: an artificial intelligence AI task or a sensing task; and
sending, by the second communication apparatus, the second task information to a fourth communication apparatus.

54. The method according to claim 53, further comprising:
receiving, by the second communication apparatus, the first feedback information from the first communication apparatus, wherein the first feedback information indicates that the first task information is successfully accepted; and
receiving, by the second communication apparatus, third feedback information from the fourth communication apparatus, wherein the third feedback information indicates that the second task information is unsuccessfully accepted.

55. The method according to claim 54, further comprising:
sending, by the second communication apparatus, first deletion indication information to the first communication apparatus, to indicate the first communication apparatus to delete the first task information.

56. The method according to any one of claims 44 to 55, wherein the first task information further comprises at least one of the following:
a function identifier of a communication function for which an output of the task is to be used;
a model parameter of an AI model used for the first task;
an execution requirement of the first task, wherein the execution requirement comprises at least one of the following: a latency parameter requirement or a reliability requirement;
time range information for executing the first task, wherein the time range information comprises at least one of the following: a quantity of execution times, execution duration, or trigger condition information; or
granularity information for executing the first task.

57. The method according to claim 56, wherein the model parameter comprises at least one of the following:
a model identifier of the AI model corresponding to the first task identifier, a first identifier of an input parameter of the AI model, or a second identifier of an output parameter of the AI model.

58. The method according to claim 56, wherein the model parameter comprises at least one of the following: a model identifier of the AI model, an input parameter of the AI model, an output parameter of the AI model, a quantity of network layers of the AI model, or a convolution parameter of the AI model.

59. An information processing method, comprising:
receiving, by a first communication apparatus, first task information that is about a task to be executed and that is from a second communication apparatus, wherein the first task information comprises a task identifier of the task and a function identifier of a communication function for which an output of the task is to be used, and the task comprises at least one of the following: an artificial intelligence AI task or a sensing task; and
causing, by the first communication apparatus based on the first task information, the task to be executed.

60. The method according to claim 59, further comprising:
sending, by the first communication apparatus, first feedback information to the second communication apparatus, wherein the first feedback information comprises the task identifier.

61. The method according to claim 60, wherein the first feedback information comprises at least one of the following:
indication information indicating whether the first task information is successfully accepted by the first communication apparatus;
indication information indicating whether execution of the task has been completed;
execution result information of the task;
execution progress information of the task;
exception information indicating that execution of the task is abnormal; or
recommendation information of the first communication apparatus for the task.

62. The method according to claim 60, wherein the first feedback information comprises execution progress information of the task, and the method further comprises:
receiving, by the first communication apparatus, state query information from the second communication apparatus, wherein the state query information comprises the task identifier.

63. The method according to claim 61 or 62, wherein the execution progress information indicates at least one of the following: completion progress information, processor capacity information, memory capacity information, electric power information, or an intermediate computing result.

64. The method according to any one of claims 60 to 63, wherein the first task information further comprises at least one of the following: geographical range information of the task, a node identifier, or an encapsulation protocol layer identifier.

65. The method according to claim 64, further comprising:
when the first communication apparatus is outside an execution range indicated by the geographical range information, stopping, by the first communication apparatus, processing of the task or deleting the task.

66. The method according to claim 65, further comprising:
sending, by the first communication apparatus, a notification message to the second communication apparatus, wherein the notification message indicates at least one of the following: the first communication apparatus is already outside the execution range, the first communication apparatus has stopped the processing of the task, or the first communication apparatus has deleted the task.

67. The method according to any one of claims 59 to 66, wherein the first task information further comprises a device identification of a third communication apparatus, and the causing, by the first communication apparatus based on the first task information, the task to be executed comprises:
sending, by the first communication apparatus, the first task information to the third communication apparatus, to cause the task to be executed by the third communication apparatus.

68. The method according to claim 67, further comprising:
receiving, by the first communication apparatus, second feedback information from the third communication apparatus; and
sending, by the first communication apparatus, the second feedback information to the second communication apparatus.

69. The method according to claim 68, wherein the second feedback information comprises at least one of the following:
indication information indicating whether the first task information is successfully accepted by the third communication apparatus;
indication information indicating whether execution of the task has been completed;
execution result information of the task;
execution progress information of the task;
exception information indicating that execution of the task is abnormal; or
recommendation information of the third communication apparatus for the task.

70. The method according to any one of claims 59 to 69, wherein the first task information further comprises at least one of the following:
a model parameter of an AI model used for the task;
an execution requirement of the task, wherein the execution requirement comprises at least one of the following: a latency requirement or a reliability requirement;
time range information for executing the task, wherein the time range information comprises at least one of the following: a quantity of execution times, execution duration, or trigger condition information; or
granularity information for executing the task.

71. The method according to claim 70, wherein the model parameter comprises at least one of the following:
a model identifier of the AI model corresponding to the task identifier, a first identifier of an input parameter of the AI model, or a second identifier of an output parameter of the AI model.

72. The method according to claim 70, wherein the model parameter comprises at least one of the following: a model identifier of the AI model, an input parameter of the AI model, an output parameter of the AI model, a quantity of network layers of the AI model, or a convolution parameter of the AI model.

73. An information processing method, comprising:
determining, by a second communication apparatus, first task information about a first task to be executed, wherein the first task information comprises a first task identifier of the first task and a function identifier of a communication function for which an output of the task is to be used, and the first task comprises at least one of the following: an artificial intelligence AI task or a sensing task; and
sending, by the second communication apparatus, the first task information to a first communication apparatus.

74. The method according to claim 73, further comprising:
receiving, by the second communication apparatus, first feedback information from the first communication apparatus, wherein the first feedback information comprises the first task identifier.

75. The method according to claim 74, wherein the first feedback information comprises at least one of the following:
indication information indicating whether the first task information is successfully accepted by the first communication apparatus;
indication information indicating whether execution of the first task has been completed;
execution result information of the first task;
execution progress information of the first task;
exception information indicating that execution of the first task is abnormal; or
recommendation information of the first communication apparatus for the first task.

76. The method according to claim 75, wherein the first feedback information comprises the execution progress information of the first task, and the method further comprises:
sending, by the second communication apparatus, state query information to the first communication apparatus, wherein the state query information comprises the first task identifier.

77. The method according to claim 75 or 76, wherein the execution progress information indicates at least one of the following: completion progress information, processor capacity information, memory capacity information, electric power information, or an intermediate computing result.

78. The method according to any one of claims 73 to 77, wherein the first task information further comprises at least one of the following: geographical range information of the first task, a node identifier, or an encapsulation protocol layer identifier.

79. The method according to claim 78, further comprising:
receiving, by the second communication apparatus, a notification message from the first communication apparatus, wherein the notification message indicates at least one of the following: the first communication apparatus is already outside an execution range indicated by the geographical range information, the first communication apparatus has stopped processing of the first task, or the first communication apparatus has deleted the first task.

80. The method according to any one of claims 73 to 79, wherein the first task information further comprises an identification of a third communication apparatus.

81. The method according to any one of claims 73 to 80, wherein the first task information further comprises the function identifier of the communication function for completing the first task.

82. The method according to claim 81, further comprising:
determining, by the second communication apparatus, second task information about a second task to be executed, wherein the second task information comprises a second task identifier of the second task, geographical range information of the second task, and the function identifier, and the second task comprises at least one of the following: an artificial intelligence AI task or a sensing task; and
sending, by the second communication apparatus, the second task information to a fourth communication apparatus.

83. The method according to claim 82, further comprising:
receiving, by the second communication apparatus, the first feedback information from the first communication apparatus, wherein the first feedback information indicates that the first task information is successfully accepted; and
receiving, by the second communication apparatus, third feedback information from the fourth communication apparatus, wherein the third feedback information indicates that the second task information is unsuccessfully accepted.

84. The method according to claim 83, further comprising:
sending, by the second communication apparatus, first deletion indication information to the first communication apparatus, to indicate the first communication apparatus to delete the first task information.

85. The method according to any one of claims 73 to 84, wherein the first task information further comprises at least one of the following:
a model parameter of an AI model used for the first task;
an execution requirement of the first task, wherein the execution requirement comprises at least one of the following: a latency parameter requirement or a reliability requirement;
time range information for executing the first task, wherein the time range information comprises at least one of the following: a quantity of execution times, execution duration, or trigger condition information; or
granularity information for executing the first task.

86. The method according to claim 85, wherein the model parameter comprises at least one of the following:
a model identifier of the AI model corresponding to the first task identifier, a first identifier of an input parameter of the AI model, or a second identifier of an output parameter of the AI model.

87. The method according to claim 85, wherein the model parameter comprises at least one of the following: a model identifier of the AI model, an input parameter of the AI model, an output parameter of the AI model, a quantity of network layers of the AI model, or a convolution parameter of the AI model.

88. A communication apparatus, comprising a module or a unit configured to perform the method according to any one of claims 1 to 14, any one of claims 30 to 43, or any one of claims 59 to 72.

89. A communication apparatus, comprising a module or a unit configured to perform the method according to any one of claims 15 to 29, any one of claims 44 to 58, or any one of claims 73 to 87.

90. A communication apparatus, comprising a processor coupled to a memory, wherein the memory stores computer instructions; and when the instructions are run by the processor, the communication apparatus is caused to perform the method according to any one of claims 1 to 14, any one of claims 30 to 43, or any one of claims 59 to 72.

91. The communication apparatus according to claim 90, further comprising one or more of the memory and a transceiver, wherein the transceiver is configured to receive and send data or signaling.

92. A communication apparatus, comprising a processor coupled to a memory, wherein the memory stores computer instructions; and when the instructions are run by the processor, the communication apparatus is caused to perform the method according to any one of claims 15 to 29, any one of claims 44 to 58, or any one of claims 73 to 87.

93. The communication apparatus according to claim 92, further comprising one or more of the memory and a transceiver, wherein the transceiver is configured to receive and send data or signaling.

94. A communication system, comprising:
a first communication apparatus, comprising the communication apparatus according to any one of claims 88, 90, or 91; and
a second communication apparatus, comprising the communication apparatus according to any one of claims 89, 92, or 93.

95. A computer-readable storage medium, wherein the computer-readable storage medium stores computer-executable instructions; and when the computer-executable instructions are executed by a processor, the method according to any one of claims 1 to 87 is performed.

96. A computer chip, comprising a processing circuit, configured to perform the method according to any one of claims 1 to 87.

97. A computer program, wherein the computer program is tangibly stored in a computer-readable medium and comprises computer-executable instructions; and when the computer-executable instructions are executed, the method according to any one of claims 1 to 87 is performed.
